(19) **Europäisches Patentamt** / **European Patent Office** / **Office européen des brevets**

(11) **EP 4 749 948 A1**

(12) **EUROPEAN PATENT APPLICATION**
published in accordance with Art. 153(4) EPC

(43) Date of publication:
**27.05.2026 Bulletin 2026/22**

(21) Application number: **24855742.3**

(22) Date of filing: **16.08.2024**

(51) International Patent Classification (IPC):
**H04B 7/06** (2006.01)   **H04W 28/086** (2023.01)

(52) Cooperative Patent Classification (CPC):
**H04B 7/0456; H04B 7/06; H04W 28/086**

(86) International application number:
**PCT/CN2024/112812**

(87) International publication number:
**WO 2025/040019 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.08.2023 CN 202311057562**

(71) Applicant: **HUAWEI TECHNOLOGIES CO., LTD.**
**Shenzhen 518129 (CN)**

(72) Inventors:
• XU, Jun
  **Shenzhen, Guangdong 518129 (CN)**
• WANG, Xiaohan
  **Shenzhen, Guangdong 518129 (CN)**
• JIN, Huangping
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **UPLINK PRECODING INDICATION METHODS AND COMMUNICATION APPARATUSES**

(57)  This application provides an uplink precoding indication method and a communication apparatus. The method includes: A terminal device receives first information from a network device, where the first information indicates M predefined codewords, transmit antenna ports corresponding to any one of the M predefined codewords are fully coherent, and M is a positive integer. In addition, the terminal device determines, based on the first information, a first uplink precoding matrix used by the terminal device to send uplink data, where a quantity of transmit antenna ports corresponding to the first uplink precoding matrix is greater than a quantity of transmit antenna ports corresponding to any one of the M predefined codewords. According to the method, an uplink precoding matrix applicable to more transmit antenna ports can be flexibly indicated, thereby effectively improving uplink transmission performance.

FIG. 3

EP 4 749 948 A1

**Description**

CROSS-REFERENCE TO RELATED APPLICATIONS

This application claims priority to Chinese Patent Application No. 202311057562.5, filed with the China National Intellectual Property Administration on August 18, 2023 and entitled "UPLINK PRECODING INDICATION METHOD AND COMMUNICATION APPARATUS", which is incorporated herein by reference in its entirety.

TECHNICAL FIELD

This application relates to the field of communication technologies, and in particular, to an uplink precoding indication method and a communication apparatus.

BACKGROUND

A 5th generation (5th generation, 5G) mobile communication system has higher requirements on a system capacity, spectral efficiency, and the like. In the 5G communication system, application of a massive multiple-input multiple-output (massive multiple-input multiple-output, massive-MIMO) technology plays a crucial role in improving spectral efficiency of the system. Based on the massive-MIMO technology, when sending uplink data, a terminal device needs to precode the data. A codebook-based uplink transmission mode is a precoding scheme for uplink transmission.
Currently, in the codebook-based uplink transmission mode, a base station selects an appropriate codeword for the terminal device from a predefined uplink codebook, and indicates the selected codeword to the terminal device. The predefined uplink codebook is stored in the base station and the terminal device. A quantity of codewords that can be selected is limited, and a quantity of transmit antenna ports and a quantity of uplink transmission layers that can be supported are limited. As a communication service has a higher requirement on an uplink system capacity, a quantity of transmit antenna ports supported by the terminal device is larger. It is clear that an existing predefined uplink codebook cannot be adapted to the quantity of transmit antenna ports, limiting uplink transmission performance.

SUMMARY

Embodiments of this application provide an uplink precoding indication method and a communication apparatus, to adapt to more transmit antenna ports by using a flexible uplink precoding matrix indicator, thereby improving uplink transmission performance.
According to a first aspect, an embodiment of this application provides an uplink precoding indication method, including: A terminal device receives first information from a network device, where the first information indicates M predefined codewords, transmit antenna ports corresponding to any one of the M predefined codewords are fully coherent, and M is a positive integer. The terminal device determines, based on the first information, a first uplink precoding matrix used by the terminal device to send uplink data, where a quantity of transmit antenna ports corresponding to the first uplink precoding matrix is greater than a quantity of transmit antenna ports corresponding to any one of the M predefined codewords.
In the foregoing design, based on a fully coherent predefined codeword, an uplink precoding matrix that is adapted to an actual quantity of uplink transmit antenna ports and an actual quantity of transmission layers is flexibly generated. This helps improve uplink transmission performance, and can meet a full power transmission requirement.
In a possible design, the terminal device further sends the uplink data based on the first uplink precoding matrix.
The following describes content of the first information in detail.
In a possible design, the first information includes a first index and a second index, the first index and/or the second index indicate/indicates the M predefined codewords, and the M predefined codewords are used to determine precoding information of two antenna port groups corresponding to the first uplink precoding matrix. In this design, a predefined codeword is indicated to the terminal device by using an index, so that signaling overheads can be reduced.
For example, a value of M is 1, a value of the first index belongs to a first index interval, a value of the second index belongs to a second index interval, the first index indicates a first predefined codeword, the first predefined codeword is used to determine precoding information of a first antenna port group in the two antenna port groups, and precoding information of a second antenna port group in the two antenna port groups is 0.
For example, the value of the first index belongs to the second index interval, the value of the second index belongs to the first index interval, the second index indicates a second predefined codeword, the second predefined codeword is used to determine the precoding information of the second antenna port group in the two antenna port groups, and the precoding information of the first antenna port group in the two antenna port groups is 0.
For example, a value of M is 2, both a value of the first index and a value of the second index belong to a first index interval, the first index indicates a third predefined codeword, the third predefined codeword is used to determine precoding information of a first antenna port group in the two antenna port groups, the second index indicates a fourth predefined codeword, and the fourth predefined codeword is used to determine precoding information of a second antenna port group in the two antenna port groups.

For example, a value of M is 1, both a value of the first index and a value of the second index belong to a second index interval, the first index and the second index indicate a fifth predefined codeword, the fifth predefined codeword is used to determine precoding information of a first antenna port group or precoding information of a second antenna port group, and the precoding information of the first antenna port group is the same as the precoding information of the second antenna port group.

In another possible design, the first uplink precoding matrix corresponds to precoding information of four antenna port groups, and the M predefined codewords indicated by the first information are used to determine precoding information of at least one of the four antenna port groups. The first information includes one or more of the following: first indication information, second indication information, and index information of the M predefined codewords. The first indication information indicates a quantity of uplink transmission layers corresponding to the first uplink precoding matrix. The second indication information indicates that a quantity of columns corresponding to P antenna port groups in the four antenna port groups in the first uplink precoding matrix is 1, and P is an integer less than or equal to 4. A candidate range of the M predefined codewords may be narrowed down by using the second indication information, so that a quantity of bits occupied by the index information of the M predefined codewords can be reduced, thereby reducing signaling overheads of the first information.

Optionally, the second indication information includes a value of P, the value of P is determined based on first column quantity allocation information corresponding to the first uplink precoding matrix, and the first column quantity allocation information indicates a quantity of columns corresponding to each of the four antenna port groups in the first uplink precoding matrix.

Optionally, the index information of the M predefined codewords includes: the first column quantity allocation information corresponding to the first uplink precoding matrix, where the first column quantity allocation information indicates the quantity of columns corresponding to each of the four antenna port groups in the first uplink precoding matrix; and/or M third indexes, where the M third indexes are in one-to-one correspondence with the M predefined codewords. The first column quantity allocation information indirectly indicates a quantity of uplink transmission layers of the predefined codeword, so that a quantity of bits occupied by an index of the predefined codeword can be reduced, thereby reducing signaling overheads of the first information.

Optionally, M is a positive integer less than or equal to 4, the M predefined codewords are used to determine precoding information of at least M antenna port groups in the four antenna port groups, and a quantity of columns corresponding to the at least M antenna port groups in the four antenna port groups in the first uplink precoding matrix is greater than 0. In this design, a plurality of antenna port groups are supported to correspond to same precoding information, so that a quantity of indicators of the predefined codeword can be reduced, thereby reducing signaling overheads of the first information.

According to a second aspect, an embodiment of this application provides an uplink precoding indication method, including: A network device determines first information, where the first information indicates M predefined codewords, transmit antenna ports corresponding to any one of the M predefined codewords are fully coherent, M is a positive integer, the first information is used to determine a first uplink precoding matrix used by a terminal device to send uplink data, and a quantity of transmit antenna ports corresponding to the first uplink precoding matrix is greater than a quantity of transmit antenna ports corresponding to any one of the M predefined codewords. The network device sends the first information to the terminal device.

In a possible design, the network device may further receive the uplink data sent by the terminal device based on the first uplink precoding matrix.

The following describes content of the first information in detail.

In a possible design, the first information includes a first index and a second index, the first index and/or the second index indicate/indicates the M predefined codewords, and the M predefined codewords are used to determine precoding information of two antenna port groups corresponding to the first uplink precoding matrix. In this design, a predefined codeword is indicated to the terminal device by using an index, so that signaling overheads can be reduced.

For example, a value of M is 1, a value of the first index belongs to a first index interval, a value of the second index belongs to a second index interval, the first index indicates a first predefined codeword, the first predefined codeword is used to determine precoding information of a first antenna port group in the two antenna port groups, and precoding information of a second antenna port group in the two antenna port groups is 0.

For example, the value of the first index belongs to the second index interval, the value of the second index belongs to the first index interval, the second index indicates a second predefined codeword, the second predefined codeword is used to determine the precoding information of the second antenna port group in the two antenna port groups, and the precoding information of the first antenna port group in the two antenna port groups is 0.

For example, a value of M is 2, both a value of the first index and a value of the second index belong to a first index interval, the first index indicates a third predefined codeword, the third predefined codeword is used to determine precoding information of a first antenna port group in the two antenna port groups, the second index indicates a fourth predefined codeword, and the fourth predefined codeword is used to determine precoding information of a second antenna port group in the two antenna port groups.

For example, a value of M is 1, both a value of the first index and a value of the second index belong to a second index interval, the first index and the second index indicate a fifth predefined codeword, the fifth predefined codeword is used to determine precoding information of a first antenna port group or precoding information of a second antenna port group, and the precoding information of the first antenna port group is the same as the precoding information of the second antenna port group.

In another possible design, the first uplink precoding matrix corresponds to precoding information of four antenna port groups, and the M predefined codewords indicated by the first information are used to determine precoding information of at least one of the four antenna port groups. The first information includes one or more of the following: first indication information, second indication information, and index information of the M predefined codewords. The first indication information indicates a quantity of uplink transmission layers corresponding to the first uplink precoding matrix. The second indication information indicates that a quantity of columns corresponding to P antenna port groups in the four antenna port groups in the first uplink precoding matrix is 1, and P is an integer less than or equal to 4. A candidate range of the M predefined codewords may be narrowed down by using the second indication information, so that a quantity of bits occupied by the index information of the M predefined codewords can be reduced, thereby reducing signaling overheads of the first information.

Optionally, the second indication information includes a value of P, the value of P is determined based on first column quantity allocation information corresponding to the first uplink precoding matrix, and the first column quantity allocation information indicates a quantity of columns corresponding to each of the four antenna port groups in the first uplink precoding matrix.

Optionally, the index information of the M predefined codewords includes: the first column quantity allocation information corresponding to the first uplink precoding matrix, where the first column quantity allocation information indicates the quantity of columns corresponding to each of the four antenna port groups in the first uplink precoding matrix; and/or M third indexes, where the M third indexes are in one-to-one correspondence with the M predefined codewords. The first column quantity allocation information indirectly indicates a quantity of uplink transmission layers of the predefined codeword, so that a quantity of bits occupied by an index of the predefined codeword can be reduced, thereby reducing signaling overheads of the first information.

Optionally, M is a positive integer less than or equal to 4, the M predefined codewords are used to determine precoding information of at least M antenna port groups in the four antenna port groups, and a quantity of columns corresponding to the at least M antenna port groups in the four antenna port groups in the first uplink precoding matrix is greater than 0. In this design, a plurality of antenna port groups are supported to correspond to same precoding information, so that a quantity of indicators of the predefined codeword can be reduced, thereby reducing signaling overheads of the first information.

According to a third aspect, an embodiment of this application provides an uplink precoding indication method, including: A terminal device sends second information to a network device, where the second information indicates that K transmit antenna ports of the terminal device support full power transmission, and K is a positive integer. The terminal device receives third information from the network device, where the third information indicates a second uplink precoding matrix. The terminal device sends uplink data based on the second uplink precoding matrix.

K is less than or equal to L, L indicates a total quantity of transmit antenna ports of the terminal device, and L is an integer greater than 4. For example, L is 8. The second uplink precoding matrix includes precoding information corresponding to the K transmit antenna ports, and precoding information of a transmit antenna port in the second uplink precoding matrix other than the K transmit antenna ports is 0.

In this design, full power transmission of a terminal device having more than four transmit antenna ports can be implemented, thereby helping improve uplink transmission performance.

In a possible design, when K is greater than 1, polarization directions of at least two of the K transmit antenna ports are different.

According to a fourth aspect, an embodiment of this application provides an uplink precoding indication method, including: A network device receives second information from a terminal device, where the second information indicates that K transmit antenna ports of the terminal device support full power transmission, and K is a positive integer. The network device sends third information to the terminal device, where the third information indicates a second uplink precoding matrix, and the second uplink precoding matrix is used by the terminal device to send uplink data.

K is less than or equal to L, L indicates a total quantity of transmit antenna ports of the terminal device, and L is an integer greater than 4. For example, L is 8. The second uplink precoding matrix includes precoding information corresponding to the K transmit antenna ports, and precoding information of a transmit antenna port in the second uplink precoding matrix other than the K transmit antenna ports is 0. In a possible design, when K is greater than 1, polarization directions of at least two of the K transmit antenna ports are different.

According to a fifth aspect, an embodiment of this application provides a communication apparatus. The communication apparatus may be a terminal device, may be an apparatus, a module, a chip, or the like in the terminal device, or may be an apparatus that can be used in matching with the terminal device. In a design, the communication apparatus may include modules that are in one-to-one correspondence with the methods/operations/steps/actions described in the first aspect. The module may be implemented by a hardware circuit, software, or a combination of the hardware circuit and the software. In a design, the communication apparatus may include a processing module and a communication module.

An example is as follows:

The communication module is configured to receive first information from a network device, where the first information indicates M predefined codewords, transmit antenna ports corresponding to any one of the M predefined codewords are fully coherent, and M is a positive integer.

The processing module is configured to determine, based on the first information, a first uplink precoding matrix used by the terminal device to send uplink data, where a quantity of transmit antenna ports corresponding to the first uplink precoding matrix is greater than a quantity of transmit antenna ports corresponding to any one of the M predefined codewords.

In a possible design, the communication module is further configured to send the uplink data based on the first uplink precoding matrix.

For content of the first information, refer to the descriptions in the first aspect for understanding. Details are not described again in this embodiment of this application.

Another example is as follows:

The processing module is configured to send second information to a network device through the communication module, where the second information indicates that K transmit antenna ports of the terminal device support full power transmission, and K is a positive integer.

The communication module is configured to receive third information from the network device, where the third information indicates a second uplink precoding matrix. The terminal device sends uplink data based on the second uplink precoding matrix.

K is less than or equal to L, L indicates a total quantity of transmit antenna ports of the terminal device, and L is an integer greater than 4. For example, L is 8. The second uplink precoding matrix includes precoding information corresponding to the K transmit antenna ports, and precoding information of a transmit antenna port in the second uplink precoding matrix other than the K transmit antenna ports is 0. In a possible design, when K is greater than 1, polarization directions of at least two of the K transmit antenna ports are different.

According to a sixth aspect, an embodiment of this application provides a communication apparatus. The communication apparatus may be a network device, may be an apparatus, a module, a chip, or the like in the network device, or may be an apparatus that can be used in matching with the network device. In a design, the communication apparatus may include modules that are in one-to-one correspondence with the methods/operations/steps/actions described in the second aspect. The module may be implemented by a hardware circuit, software, or a combination of the hardware circuit and the software. In a design, the communication apparatus may include a processing module and a communication module.

An example is as follows:

The processing module is configured to determine first information, where the first information indicates M predefined codewords, transmit antenna ports corresponding to any one of the M predefined codewords are fully coherent, M is a positive integer, the first information is used to determine a first uplink precoding matrix used by a terminal device to send uplink data, and a quantity of transmit antenna ports corresponding to the first uplink precoding matrix is greater than a quantity of transmit antenna ports corresponding to any one of the M predefined codewords.

The communication module is configured to send the first information to the terminal device.

In a possible design, the network device may further receive the uplink data sent by the terminal device based on the first uplink precoding matrix.

Another example is as follows:

The communication module is configured to receive second information from a terminal device, where the second information indicates that K transmit antenna ports of the terminal device support full power transmission, and K is a positive integer.

The processing module is configured to send third information to the terminal device through the communication module, where the third information indicates a second uplink precoding matrix, and the second uplink precoding matrix is used by the terminal device to send uplink data.

K is less than or equal to L, L indicates a total quantity of transmit antenna ports of the terminal device, and L is an integer greater than 4. For example, L is 8. The second uplink precoding matrix includes precoding information corresponding to the K transmit antenna ports, and precoding information of a transmit antenna port in the second uplink precoding matrix other than the K transmit antenna ports is 0. In a possible design, when K is greater than 1, polarization directions of at least two of the K transmit antenna ports are different.

According to a seventh aspect, an embodiment of this application provides a communication apparatus. The communication apparatus includes a processor, configured to implement the method described in the first aspect. The processor is coupled to a memory. The memory is configured to store instructions and data. When executing the instructions stored in the memory, the processor may implement the method described in the first aspect or the third aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to an eighth aspect, an embodiment of this application provides a communication apparatus. The communication apparatus includes a processor, configured to implement the method described in the second aspect. The processor is coupled to a memory. The memory is configured to store instructions and data. When executing the instructions stored in the memory, the processor may implement the method described in the second aspect or the fourth aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to a ninth aspect, an embodiment of this application provides a communication apparatus, including a logic circuit and an interface circuit. The interface circuit is configured to communicate with a module outside the communication apparatus. The logic circuit is configured to execute a computer program, to enable the communication apparatus to perform the method provided in any one of the first aspect to the fourth aspect.

According to a tenth aspect, an embodiment of this application provides a communication system, including the communication apparatus described in the fifth aspect or the seventh aspect, and the communication apparatus described in the sixth aspect or the eighth aspect.

According to an eleventh aspect, an embodiment of this application further provides a computer program. When the computer program is run on a computer, the computer is enabled to perform the method provided in any one of the first aspect to the fourth aspect.

According to a twelfth aspect, an embodiment of this application further provides a computer program product, including instructions. When the instructions are run on a computer, the computer is enabled to perform the method provided in any one of the first aspect to the fourth aspect.

According to a thirteenth aspect, an embodiment of this application further provides a computer-readable storage medium. The computer-readable storage medium stores a computer program or instructions. When the computer program or the instructions are run on a computer, the computer is enabled to perform the method provided in any one of the first aspect to the fourth aspect.

According to a fourteenth aspect, an embodiment of this application further provides a chip. The chip is configured to read a computer program stored in a memory, to perform the method provided in any one of the first aspect to the fourth aspect.

According to a fifteenth aspect, an embodiment of this application further provides a chip system. The chip system includes a processor, configured to support a computer apparatus to implement the method provided in any one of the first aspect to the fourth aspect. In a possible design, the chip system further includes a memory, and the memory is configured to store a program and data that are necessary for the computer apparatus. The chip system may include a chip, or may include a chip and another discrete device.

For effects of the solutions provided in any one of the second aspect to the fourteenth aspect, refer to corresponding descriptions in the first aspect.

BRIEF DESCRIPTION OF DRAWINGS

FIG. 1 is a diagram of a structure of a communication system;
FIG. 2 is a diagram of interaction between an access network device and a terminal device;
FIG. 3 is one of schematic flowcharts of an uplink precoding indication method according to an embodiment of this application;
FIG. 4 is a diagram of distribution of transmit antenna ports according to an embodiment of this application;
FIG. 5 is one of schematic flowcharts of an uplink precoding indication method according to an embodiment of this application;

FIG. 6 is one of schematic flowcharts of an uplink precoding indication method according to an embodiment of this application;

FIG. 7 is a diagram of a structure of a communication apparatus according to an embodiment of this application; and

FIG. 8 is a diagram of a structure of another communication apparatus according to an embodiment of this application.

DESCRIPTION OF EMBODIMENTS

To make objectives, technical solutions, and advantages of embodiments of this application clearer, the following further describes embodiments of this application in detail with reference to the accompanying drawings.

At least one piece (item) below in embodiments of this application indicates one or more pieces (items). A plurality of pieces (items) mean two or more pieces (items). The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in embodiments of this application to describe objects, these objects should not be limited by these terms. These terms are merely used for distinguishing the objects from each other.

The terms "include", "have", and any variant thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word like "example" or "for example" is used to represent giving an example, an illustration, or a description. Any method or design solution described as an "example" or "for example" in embodiments of this application should not be explained as being more preferred or having more advantages than another method or design solution. Exactly, use of the word like "example" or "for example" is intended to present a relative concept in a specific manner.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In this application, the network element is used as an example for description. For example, the communication system may include at least one terminal device and at least one network device. The network device may send a downlink signal to the terminal device, and/or the terminal device may send an uplink signal to the network device. In addition, it may be understood that if the communication system includes a plurality of terminal devices, the plurality of terminal devices may also send a signal to each other, in other words, both a network element that sends a signal and a network element that receives the signal may be terminal devices.

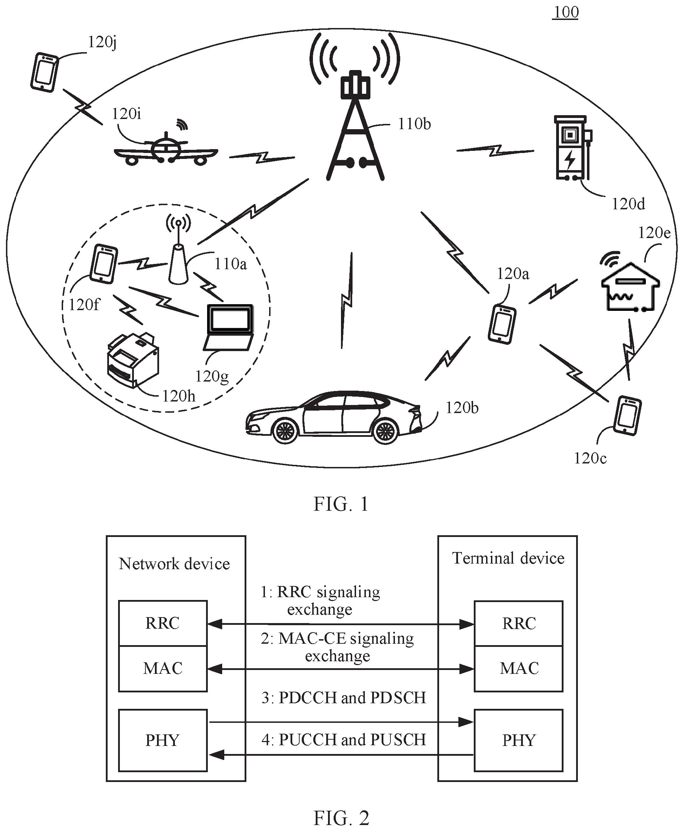

FIG. 1 shows a communication system 100. The wireless communication system includes a radio access network. The radio access network may be a next generation (for example, 6G or later) radio access network, or a conventional (for example, 5G, 4G, 3G, or 2G) radio access network. One or more terminal devices (120a to 120j, collectively referred to as 120) may be connected to each other or connected to one or more network devices (110a and 110b, collectively referred to as 110) in the radio access network. Optionally, FIG. 1 is merely a diagram. The wireless communication system may further include another device, for example, may further include a core network device, a wireless relay device, and/or a wireless backhaul device, which are not shown in FIG. 1.

The following describes in detail the network device and the terminal device in FIG. 1.

The network device may be an entity that is on a network side and that is configured to transmit or receive a signal. The network device may be an access device via which the terminal device accesses the wireless communication system in a wireless manner. For example, the network device may be a base station. The base station may cover various names in the following in a broad sense, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting and receiving point (transmitting and receiving point, TRP), a transmitting point (transmitting point, TP), a master station MeNB, a secondary station SeNB, a multi-standard radio (MSR) node, a home base station, a network controller, an access node, a radio node, an access point (AP), a transmission node, a transceiver node, a baseband unit (BBU), a remote radio unit (RRU), an active antenna unit (AAU), a radiofrequency head (RRH), a central unit (CU), a distributed unit (DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or may be a combination thereof. Alternatively, the network device may be a communication module, a modem, or a chip disposed in the foregoing device or apparatus. Alternatively, the network device may be a mobile switching center, a device that takes on a base station function in device-to-device (Device-to-Device, D2D) communication, vehicle-to-everything (vehicle-to-everything, V2X) communication, or machine-to-machine (machine-to-machine, M2M) communication, a network side device in a 6G network, a device that takes on a base station function in a future communication system, or the like. The network device may support networks with a same access technology or different access technologies. A specific technology and a specific device form that are used by the network device are not limited in embodiments of this application.

The network device may be fixed or mobile. For example, base stations 110a and 110b are stationary, and are responsible for wireless transmission and reception in one or more cells from the terminal device 120. A helicopter or an uncrewed aerial vehicle 120i shown in FIG. 1 may be configured to serve as a mobile base station, and one or more cells may move based on a location of the mobile base station 120i. In another example, the helicopter or the uncrewed aerial vehicle (120i) may be configured to serve as a terminal device communicating with the base station 110b.

The network device in embodiments of this application may be an integrated base station, or may be a base station including a central unit (central unit, CU) and/or a distributed unit (distributed unit, DU). The base station including the CU and the DU may also be referred to as a base station in which a CU and a DU are split from each other. For example, the base station includes a gNB-CU and a gNB-DU. The CU may be further split into a CU control plane (CU control plane, CU-CP) and a CU user plane (CU user plane, CU-UP). For example, the base station includes a gNB-CU-CP, a gNB-CU-UP, and a gNB-DU. Alternatively, the network device in embodiments of this application may be an antenna unit (radio unit, RU). Alternatively, the network device in embodiments of this application may be of an open radio access network (O-RAN) architecture or the like. A specific deployment manner of the network device is not limited in embodiments of this application. For example, when the network device is of the O-RAN architecture, the network device shown in embodiments of this application may be an access network device in the O-RAN, for example, one or a combination of a CU, a DU, or an RU, or may be a module in the access network device. In an O-RAN system, a CU may also be referred to as an open (open, O)-CU, a CU-CP may also be referred to as an O-CU-CP, a CU-UP may also be referred to as an O-CU-UP, and an RU may also be referred to as an O-RU.

In this application, a communication apparatus configured to implement a function of the access network may be an access network device, a network device having a part of functions of the access network, or an apparatus that can support implementation of the function of the access network, for example, a chip system, a hardware circuit, a software module, or a combination of the hardware circuit and the software module. The apparatus may be installed in the access network device or used in matching with the access network device. In the method in this application, an example in which a communication apparatus configured to implement a function of the access network device is an access network device is used for description.

The terminal device may be an entity, for example, a mobile phone, that is on a user side and that is configured to receive or transmit a signal. The terminal device may be configured to connect to a person, an object, and a machine. The terminal device may communicate with one or more core networks via the network device. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. The terminal device 120 may be widely used in various scenarios, for example, cellular communication, device-to-device D2D, vehicle-to-everything V2X, peer-to-peer P2P, machine-to-machine M2M, machine type communication MTC, internet of things IoT, virtual reality VR, augmented reality AR, industrial control, autonomous driving, remote medical, a smart grid, smart furniture, smart office, smart wearable, smart transportation, a smart city, an uncrewed aerial vehicle, a robot, remote sensing, passive sensing, positioning, navigation and tracking, and autonomous delivery and mobility. Some examples of the terminal device 120 are 3GPP-standard user equipment (UE), a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal like a smart oil filler in a smart city (smart city), a terminal device on a high-speed railway, and wireless terminals such as a smart speaker, a smart coffee machine, and a smart printer in a smart home (smart home). The terminal device 120 may be a wireless device in the foregoing scenarios or an apparatus disposed in the wireless device, for example, a communication module, a modem, or a chip in the foregoing device. The terminal device may also be referred to as a terminal, terminal equipment, user equipment (user equipment, UE), a mobile station (mobile station, MS), a mobile terminal (mobile terminal, MT), or the like. Alternatively, the terminal device may be a terminal device in a future wireless communication system. The terminal device may be used in a dedicated network device or a general-purpose device. A specific technology and a specific device form that are used by the terminal device are not limited in embodiments of this application.

Optionally, terminal devices may communicate with each other by using a sidelink signal. For example, as shown in FIG. 1, a cellular phone 120a and a car 120b communicate with each other by using a sidelink signal. The cellular phone 120a communicates with a smart home device 120e without relaying a communication signal via the base station 110b.

In this application, a communication apparatus configured to implement a function of the terminal device may be a terminal device, a terminal device having a part of functions of the terminal device, or an apparatus that can support implementation of the function of the terminal device, for example, a chip system. The apparatus may be installed in the terminal device or used in matching with the terminal device. In this application, the chip system may include a chip, or may include a chip and another discrete device. In the technical solutions provided in this application, an example in which the communication apparatus is a terminal device or UE is used for description.

Further, refer to FIG. 2. The network device and the terminal device in embodiments of this application may include the following modules:

Radio resource control (radio resource control, RRC) signaling exchange module: is a module used by the network device and the terminal device to send and receive RRC signaling. For example, the network device sends the RRC signaling to the terminal device, and the terminal device receives the RRC signaling from the network device.

Media access control (media access control, MAC) layer signaling exchange module: is a module used by the network device and the terminal device to send and receive medium access control (medium access control, MAC)-control element (control element, CE) signaling. For example, the network device sends the MAC-CE signaling to the terminal device, and the terminal device receives the MAC-CE signaling from the network device.

Physical layer (physical layer, PHY) signaling and data exchange module: is a module used by the network device and the terminal device to send and receive uplink/downlink control signaling and uplink/downlink data. For example, the network device sends a physical downlink control channel (physical downlink control channel, PDCCH), for example, downlink control information (downlink control information, DCI) in the PDCCH, to the terminal device, and the network device sends a physical downlink shared channel (physical downlink shared channel, PDSCH), for example, downlink data in the PDSCH, to the terminal device. The terminal device sends a physical uplink control channel (physical uplink control channel, PUCCH), for example, uplink control information (uplink control information, UCI) in the PUCCH, to the network device, and the terminal device sends a physical uplink shared channel (physical uplink shared channel, PUSCH), for example, uplink data in the PUSCH, to the network device.

It should be understood that the modules shown in FIG. 2 are merely examples. The network device and the terminal device may further include another communication module, for example, a radio link control (radio link control, RLC) module, a packet data convergence protocol (packet data convergence protocol, PDCP) module, or a service data adaptation protocol (service data adaptation protocol, SDAP) module. This is not specifically limited in embodiments of this application.

It should be noted that quantities and types of the devices in the communication system shown in FIG. 1 are merely used as examples. Embodiments of this application are not limited thereto. In actual application, the communication system may further include more terminal devices and more network devices, and may further include other network elements, for example, may include a core network element and a network management device like an operation administration and maintenance (operation administration and maintenance, OAM) network element.

In a massive-MIMO technology, the terminal device may send uplink data to the network device through a plurality of transmit antenna ports. To use a spatial degree of freedom brought by the massive-MIMO technology, the terminal device needs to precode uplink transmission information during uplink transmission. The precoding for uplink transmission may be a codebook-based uplink transmission mode. It should be noted that, in the method provided in embodiments of this application, an example in which an object on which precoding is performed is uplink data is used for description. The uplink data may be, for example, uplink service data or uplink signaling data. In practice, the object on which precoding is performed may alternatively be any uplink transmission information. This is not specifically limited in embodiments of this application.

For ease of understanding, some technical terms in embodiments of this application are first described.

(1) Transmit antenna port

Embodiments of this application relate to a transmit antenna port of a terminal device. One or more physical antennas of the terminal device form one logical antenna, and one transmit antenna port corresponds to a port of one logical antenna. There may be one or more transmit antenna ports of the terminal device. For example, the terminal device has two transmit antenna ports, four transmit antenna ports, eight transmit antenna ports, 16 transmit antenna ports, 32 transmit antenna ports, or the like. Optionally, when the terminal device has two transmit antenna ports, the terminal device may also be referred to as a 2Tx terminal. When the terminal device has four transmit antenna ports, the terminal device may be referred to as a 4Tx terminal. When the terminal device has eight transmit antenna ports, the terminal device may also be referred to as an 8Tx terminal. When the terminal device has 16 transmit antenna ports, the terminal device may be referred to as a 16Tx terminal. When the terminal device has 32 transmit antenna ports, the terminal device may be referred to as a 32Tx terminal.

(2) Coherence capability of the terminal device

The coherence capability of the terminal device includes non-coherent (non-coherent), partially coherent (partially coherent), or fully coherent (fully coherent). The non-coherent means that the terminal device can send uplink data only through one of a plurality of transmit antenna ports at one moment, or the non-coherent may be described as that the plurality of transmit antenna ports are non-coherent. The partially coherent means that the terminal device can simultaneously send uplink data through some (at least two) of the plurality of transmit antenna ports, or the partially coherent may be described as that the plurality of transmit antenna ports are partially coherent. The fully coherent means that the terminal device can simultaneously send uplink data through all of the plurality of transmit antenna ports, or the fully coherent may be described as that the plurality of transmit antenna ports are fully coherent.
For example, for a coherence capability of the 8Tx terminal, the following four cases A1 to A4 are mainly considered in embodiments of this application:

A1: The eight antenna ports of the terminal device have a fully coherent capability, which is denoted as fully coherent.
A2: The eight antenna ports of the terminal device are grouped into two groups, each group has four antenna ports, and the four antenna ports in the group may perform coherent sending, which is denoted as partially coherent 1.
A3: The eight antenna ports of the terminal device are grouped into four groups, each group has two antenna ports, and the two antenna ports in the group may perform coherent sending, which is denoted as partially coherent 2.
A4: The eight antenna ports of the terminal device are non-coherent, and only non-coherent sending can be performed.

(3) Quantity of uplink transmission layers

The quantity of uplink transmission layers means a quantity of uplink data streams, or is referred to as a quantity of spatial streams. For spatial multiplexing, a maximum quantity of uplink transmission layers is a rank (rank) of a MIMO channel matrix. The rank of the MIMO channel matrix is a quantity of diagonal elements (singular values) of an intermediate diagonal matrix obtained by performing transition matrix singular value decomposition (singular value decomposition, SVD) on the MIMO channel matrix. Usually, a maximum quantity of uplink transmission layers of the terminal device is less than or equal to a quantity of transmit antenna ports of the terminal device, and an actual quantity of uplink transmission layers of the terminal device is less than or equal to the maximum quantity of uplink transmission layers of the terminal device. For example, if the maximum quantity of uplink transmission layers of the terminal device is equal to the quantity of transmit antenna ports of the terminal device, and the quantity of transmit antenna ports of the terminal device is 8, the maximum quantity of transmission layers corresponding to the quantity of transmit antenna ports of the terminal device is 8, and the quantity of uplink transmission layers of the terminal device may be any integer from 1 to 8.

(4) Codebook and codeword

The codebook in embodiments of this application mainly complies with a codebook defined in a 3rd generation partnership project (3rd Generation Partnership Project, 3GPP) standard, for example, a codebook defined in a 3GPP technical specification (technical specification, TS) 38.211 protocol, or may be described as an uplink codebook. For example, a plurality of codebooks are defined in a 3GPP TS 38.211 V16.7.0 protocol, each codebook includes a plurality of codewords, and the codeword is also referred to as an uplink precoding matrix. A quantity of rows of the codeword corresponds to a quantity of transmit antenna ports, and a quantity of columns of the codeword corresponds to a quantity of uplink transmission layers. Codewords in a same codebook correspond to a same quantity of transmit antenna ports and a same quantity of uplink transmission layers. For ease of understanding, the following Table 1 and Table 2 respectively show codebooks whose corresponding quantities of uplink transmission layers are 1 and 2 and whose corresponding quantities of transmit antenna ports are both 2. The following Table 3 to Table 6 respectively show codebooks whose corresponding quantities of uplink transmission layers are 1 to 4 and whose corresponding quantities of transmit antenna ports are all 4.

Table 1

| TPMI | Codeword | | | | | | | |
|---|---|---|---|---|---|---|---|---|
| 0 to 5 | $\frac{1}{\sqrt{2}}\begin{bmatrix} 1 \\ 0 \end{bmatrix}$ | $\frac{1}{\sqrt{2}}\begin{bmatrix} 0 \\ 1 \end{bmatrix}$ | $\frac{1}{\sqrt{2}}\begin{bmatrix} 1 \\ 1 \end{bmatrix}$ | $\frac{1}{\sqrt{2}}\begin{bmatrix} 1 \\ -1 \end{bmatrix}$ | $\frac{1}{\sqrt{2}}\begin{bmatrix} 1 \\ j \end{bmatrix}$ | $\frac{1}{\sqrt{2}}\begin{bmatrix} 1 \\ -j \end{bmatrix}$ | | |

Transmitted precoding matrix indicator (transmitted precoding matrix indicator, TPMI) values corresponding to the six codewords shown in Table 1 from left to right are 0 to 5. For example, a TPMI of a 1st codeword from left to right is equal to 0, and a TPMI of a 6th codeword from left to right is equal to 5. Each codeword is a $2\times1$ matrix. To be specific, each matrix includes two rows, and this indicates that a quantity of transmit antenna ports corresponding to the codeword is 2; each matrix includes one column, and this indicates that a quantity of uplink transmission layers corresponding to the codeword is 1; and j represents an imaginary number. The TPMI may be understood as a sequence number or an index of a codeword in a codebook.

There is only one non-zero element in codewords indicated by TPMI=0 and TPMI=1, and this indicates that two transmit antenna ports corresponding to the codewords are non-coherent. Elements in codewords indicated by TPMIs=2 to 5 are all non-zero elements, and this indicates that two transmit antenna ports corresponding to the codewords are fully coherent.

Table 2

| TPMI | Codeword | | |
|---|---|---|---|
| 0 to 2 | $\frac{1}{\sqrt{2}}\begin{bmatrix} 1 & 0 \\ 0 & 1 \end{bmatrix}$ | $\frac{1}{2}\begin{bmatrix} 1 & 1 \\ 1 & -1 \end{bmatrix}$ | $\frac{1}{2}\begin{bmatrix} 1 & 1 \\ j & -j \end{bmatrix}$ |

TPMI values corresponding to the three codewords shown in Table 2 from left to right are 0 to 2, and each codeword is a $2\times2$ matrix. To be specific, each matrix includes two rows, and this indicates that a quantity of transmit antenna ports corresponding to the codeword is 2; and each matrix includes two columns, and this indicates that a quantity of uplink transmission layers corresponding to the codeword is 2.

There is only one non-zero element in each column of a codeword indicated by TPMI=0, and this indicates that two transmit antenna ports corresponding to the codeword are non-coherent. Elements in each column of codewords indicated by TPMIs=1 and 2 are all non-zero elements, and this indicates that two transmit antenna ports corresponding to the codewords are fully coherent.

Table 3

| TPMI | Codeword | | | | | | | |
|---|---|---|---|---|---|---|---|---|
| 0 to 7 | $\frac{1}{2}\begin{bmatrix} 1 \\ 0 \\ 0 \\ 0 \end{bmatrix}$ | $\frac{1}{2}\begin{bmatrix} 0 \\ 1 \\ 0 \\ 0 \end{bmatrix}$ | $\frac{1}{2}\begin{bmatrix} 0 \\ 0 \\ 1 \\ 0 \end{bmatrix}$ | $\frac{1}{2}\begin{bmatrix} 0 \\ 0 \\ 0 \\ 1 \end{bmatrix}$ | $\frac{1}{2}\begin{bmatrix} 1 \\ 0 \\ 1 \\ 0 \end{bmatrix}$ | $\frac{1}{2}\begin{bmatrix} 1 \\ 0 \\ -1 \\ 0 \end{bmatrix}$ | $\frac{1}{2}\begin{bmatrix} 1 \\ 0 \\ j \\ 0 \end{bmatrix}$ | $\frac{1}{2}\begin{bmatrix} 1 \\ 0 \\ -j \\ 0 \end{bmatrix}$ |
| 8 to 15 | $\frac{1}{2}\begin{bmatrix} 0 \\ 1 \\ 0 \\ 1 \end{bmatrix}$ | $\frac{1}{2}\begin{bmatrix} 0 \\ 1 \\ 0 \\ -1 \end{bmatrix}$ | $\frac{1}{2}\begin{bmatrix} 0 \\ 1 \\ 0 \\ j \end{bmatrix}$ | $\frac{1}{2}\begin{bmatrix} 0 \\ 1 \\ 0 \\ -j \end{bmatrix}$ | $\frac{1}{2}\begin{bmatrix} 1 \\ 1 \\ 1 \\ 1 \end{bmatrix}$ | $\frac{1}{2}\begin{bmatrix} 1 \\ 1 \\ j \\ j \end{bmatrix}$ | $\frac{1}{2}\begin{bmatrix} 1 \\ 1 \\ -1 \\ -1 \end{bmatrix}$ | $\frac{1}{2}\begin{bmatrix} 1 \\ 1 \\ -j \\ -j \end{bmatrix}$ |

(continued)

| TPMI | Codeword | | | | | | | |
|---|---|---|---|---|---|---|---|---|
| 16 to 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 to 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

Table 3 shows that TPMI values corresponding to the eight codewords in a 1st row from left to right are 0 to 7, TPMI values corresponding to the eight codewords in a 2nd row from left to right are 8 to 15, TPMI values corresponding to the eight codewords in a 3rd row from left to right are 16 to 23, and TPMI values corresponding to the four codewords in a 4th row from left to right are 24 to 27. Each codeword is a 4×1 matrix. To be specific, each matrix includes four rows, and this indicates that a quantity of transmit antenna ports corresponding to the codeword is 4; and each matrix includes one column, and this indicates that a quantity of uplink transmission layers corresponding to the codeword is 1.

There is only one non-zero element in codewords indicated by TPMIs=0 to 3, and this indicates that four transmit antenna ports corresponding to the codewords are non-coherent. Some elements are non-zero elements and values of some elements are 0 in codewords indicated by TPMIs=4 to 11, and this indicates that four transmit antenna ports corresponding to the codewords are partially coherent. Elements in codewords indicated by TPMIs=12 to 27 are all non-zero elements, and this indicates that four transmit antenna ports corresponding to the codewords are fully coherent.

Table 4

| TPMI | Codeword | | | |
|---|---|---|---|---|
| 0 to 3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4 to 7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8 to 11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |
| 12 to 15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |

(continued)

| TPMI | Codeword | | | |
|---|---|---|---|---|
| 16 to 19 | $\dfrac{1}{2\sqrt{2}}\begin{bmatrix} 1 & 1 \\ j & j \\ 1 & -1 \\ j & -j \end{bmatrix}$ | $\dfrac{1}{2\sqrt{2}}\begin{bmatrix} 1 & 1 \\ j & j \\ j & -j \\ -1 & 1 \end{bmatrix}$ | $\dfrac{1}{2\sqrt{2}}\begin{bmatrix} 1 & 1 \\ -1 & -1 \\ 1 & -1 \\ -1 & 1 \end{bmatrix}$ | $\dfrac{1}{2\sqrt{2}}\begin{bmatrix} 1 & 1 \\ -1 & -1 \\ j & -j \\ -j & j \end{bmatrix}$ |
| 20 and 21 | $\dfrac{1}{2\sqrt{2}}\begin{bmatrix} 1 & 1 \\ -j & -j \\ 1 & -1 \\ -j & j \end{bmatrix}$ | $\dfrac{1}{2\sqrt{2}}\begin{bmatrix} 1 & 1 \\ -j & -j \\ j & -j \\ 1 & -1 \end{bmatrix}$ | - | - |

Table 4 shows that TPMI values corresponding to the four codewords in a 1st row from left to right are 0 to 3, TPMI values corresponding to the four codewords in a 2nd row from left to right are 4 to 7, TPMI values corresponding to the four codewords in a 3rd row from left to right are 8 to 11, TPMI values corresponding to the four codewords in a 4th row from left to right are 12 to 15, TPMI values corresponding to the four codewords in a 5th row from left to right are 16 to 19, and TPMI values corresponding to the two codewords in a 6th row from left to right are 20 and 21. Each codeword is a $4\times2$ matrix. To be specific, each matrix includes four rows, and this indicates that a quantity of transmit antenna ports corresponding to the codeword is 4; and each matrix includes two columns, and this indicates that a quantity of uplink transmission layers corresponding to the codeword is 2.

There is only one non-zero element in each column of codewords indicated by TPMIs=0 to 5, and this indicates that four transmit antenna ports corresponding to the codewords are non-coherent. Some elements are non-zero elements and values of some elements are 0 in each column of codewords indicated by TPMIs=6 to 13, and this indicates that four transmit antenna ports corresponding to the codewords are partially coherent. Elements in each column of codewords indicated by TPMIs=14 to 21 are all non-zero elements, and this indicates that four transmit antenna ports corresponding to the codewords are fully coherent.

Table 5

| TPMI | Codeword | | | |
|---|---|---|---|---|
| 0 to 3 | $\dfrac{1}{2}\begin{bmatrix} 1 & 0 & 0 \\ 0 & 1 & 0 \\ 0 & 0 & 1 \\ 0 & 0 & 0 \end{bmatrix}$ | $\dfrac{1}{2}\begin{bmatrix} 1 & 0 & 0 \\ 0 & 1 & 0 \\ 1 & 0 & 0 \\ 0 & 0 & 1 \end{bmatrix}$ | $\dfrac{1}{2}\begin{bmatrix} 1 & 0 & 0 \\ 0 & 1 & 0 \\ -1 & 0 & 0 \\ 0 & 0 & 1 \end{bmatrix}$ | $\dfrac{1}{2\sqrt{3}}\begin{bmatrix} 1 & 1 & 1 \\ 1 & -1 & 1 \\ 1 & 1 & -1 \\ 1 & -1 & -1 \end{bmatrix}$ |
| 4 to 6 | $\dfrac{1}{2\sqrt{3}}\begin{bmatrix} 1 & 1 & 1 \\ 1 & -1 & 1 \\ j & j & -j \\ j & -j & -j \end{bmatrix}$ | $\dfrac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\dfrac{1}{2\sqrt{3}}\begin{bmatrix} 1 & 1 & 1 \\ -1 & 1 & -1 \\ j & j & -j \\ -j & j & j \end{bmatrix}$ | - |

Table 5 shows that TPMI values corresponding to the four codewords in a 1st row from left to right are 0 to 3, and TPMI values corresponding to the four codewords in a 2nd row from left to right are 4 to 6. Each codeword is a $4\times3$ matrix. To be specific, each matrix includes four rows, and this indicates that a quantity of transmit antenna ports corresponding to the codeword is 4; and each matrix includes three columns, and this indicates that a quantity of uplink transmission layers corresponding to the codeword is 3.

There is only one non-zero element in each column of a codeword indicated by TPMI=0, and this indicates that four transmit antenna ports corresponding to the codeword are non-coherent. Some elements are non-zero elements and values of some elements are 0 in at least one column of codewords indicated by TPMIs=1 and 2, and this indicates that four transmit antenna ports corresponding to the codewords are partially coherent. Elements in each column of codewords indicated by TPMIs=3 to 6 are all non-zero elements, and this indicates that four transmit antenna ports corresponding to the codewords are fully coherent.

Table 6

| TPMI | Codeword | | | |
|---|---|---|---|---|
| 0 to 3 | $\dfrac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\dfrac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\dfrac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\dfrac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\dfrac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

Table 6 shows that TPMI values corresponding to the four codewords in a 1st row from left to right are 0 to 3, and a TPMI value corresponding to the codeword in a 2nd row is 4. Each codeword is a 4×4 matrix. To be specific, each matrix includes four rows, and this indicates that a quantity of transmit antenna ports corresponding to the codeword is 4; and each matrix includes four columns, and this indicates that a quantity of uplink transmission layers corresponding to the codeword is 4.

There is only one non-zero element in each column of a codeword indicated by TPMI=0, and this indicates that four transmit antenna ports corresponding to the codeword are non-coherent. Some elements are non-zero elements and values of some elements are 0 in each column of codewords indicated by TPMIs=1 and 2, and this indicates that four transmit antenna ports corresponding to the codewords are partially coherent. Elements in each column of codewords indicated by TPMIs=3 and 4 are all non-zero elements, and this indicates that four transmit antenna ports corresponding to the codewords are fully coherent.

In a related conventional technology, an access network device usually estimates a channel condition status of a radio channel between the terminal device and the access network device based on a reference signal, for example, a sounding reference signal (sounding reference signal, SRS), sent by the terminal device to measure an uplink channel. The access network device determines, based on the channel condition status, a quantity of transmit antenna ports used by the terminal device, and then calculates, based on the quantity of transmit antenna ports used by the terminal device and the channel condition status, an uplink precoding matrix that can be used by the terminal device to send uplink data. The calculated uplink precoding matrix corresponds to the quantity of transmit antenna ports used by the terminal device and a specific quantity of uplink transmission layers. The access network device selects, based on the specific quantity of uplink transmission layers from the codebook predefined in the 3GPP protocol, a codeword closest to the calculated uplink precoding matrix, and indicates, to the terminal device, a TPMI and a quantity of uplink transmission layers that correspond to the codeword. A quantity of transmit antenna ports corresponding to the TPMI indicated by the access network device may be used as a quantity of transmit antenna ports used by the terminal device to send the uplink data, and the quantity of uplink transmission layers indicated by the access network device may be used as a quantity of uplink transmission layers to which the uplink data to be sent by the terminal device is mapped. Then, the terminal device determines the codeword based on the TPMI and the quantity of uplink transmission layers that are indicated by the access network device, precodes the uplink data by using the codeword, and sends precoded uplink data based on the quantity of transmit antenna ports and the quantity of uplink transmission layers that correspond to the codeword.

It may be understood that "predefined" may mean being defined in a communication protocol and configured in communication parties: the access network device and the terminal device, or may mean being determined and configured by the access network device for the terminal device, where the configuration may be performed explicitly by using signaling or may be performed implicitly by using other information. The "indication" may include direct indication and indirect indication, or may include explicit indication and implicit indication. Information indicated by a piece of information (such as first indication information or second indication information described below) is referred to as to-be-indicated information. In a specific implementation process, there are a plurality of manners of indicating the to-be-indicated information. For example, the to-be-indicated information may be directly indicated, where the to-be-indicated information, an index of the to-be-indicated information, or the like is indicated. For another example, the to-be-indicated information may be indirectly indicated by indicating other information, where there is an association relationship between the other information and the to-be-indicated information. For another example, only a part of the to-be-indicated information may be indicated, and the other part of the to-be-indicated information is known, is agreed upon in advance, or may be deduced. In addition, specific information may alternatively be indicated by using a pre-agreed (for example, stipulated in a protocol) arrangement sequence of various pieces of information, to reduce indication overheads to some extent.

In an example, for a predefined codebook corresponding to four transmit antenna ports, refer to Table 7.3.1.1.2-2 in the 3GPP TS 38.212 V16.7.0 protocol for understanding, as shown in the following Table 7.

Table 7

| Index | Codebook subset=fully coherent, partially coherent, and non-coherent | Index | Codebook subset=partially coherent and non-coherent | Index | Codebook subset=non-coherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | | ... | | ... | |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| ... | | ... | | ... | |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| 11 | 4 layers: TPMI=0 | 11 | 4 layers: TPMI=0 | 11 | 4 layers: TPMI=0 |
| 12 | 1 layer: TPMI=4 | 12 | 1 layer: TPMI=4 | 12 to 15 | Reserved bit |
| ... | | ... | | | |
| 19 | 1 layer: TPMI=11 | 19 | 1 layer: TPMI=11 | | |
| 20 | 2 layers: TPMI=6 | 20 | 2 layers: TPMI=6 | | |
| ... | | ... | | | |
| 27 | 2 layers: TPMI=13 | 27 | 2 layers: TPMI=13 | | |
| 28 | 3 layers: TPMI=1 | 28 | 3 layers: TPMI=1 | | |
| 29 | 3 layers: TPMI=2 | 29 | 3 layers: TPMI=2 | | |
| 30 | 4 layers: TPMI=1 | 30 | 4 layers: TPMI=1 | | |
| 31 | 4 layers: TPMI=2 | 31 | 4 layers: TPMI=2 | | |
| 32 | 1 layer: TPMI=12 | | | | |
| ... | | | | | |
| 47 | 1 layer: TPMI=27 | | | | |
| 48 | 2 layers: TPMI=14 | | | | |
| ... | | | | | |
| 55 | 2 layers: TPMI=21 | | | | |
| 56 | 3 layers: TPMI=3 | | | | |
| ... | | | | | |
| 59 | 3 layers: TPMI=6 | | | | |
| 60 | 4 layers: TPMI=3 | | | | |
| 61 | 4 layers: TPMI=4 | | | | |
| 62 and 63 | Reserved bit | | | | |

The TPMIs in Table 7 may be TPMIs in the codebook whose corresponding quantity of transmit antenna ports is 4, that is, the TPMIs in Table 3 to Table 6. One first index in Table 7 indicates a quantity of uplink transmission layers corresponding to one codeword and a TPMI of the codeword. In other words, the first index may be understood as a joint index. Being non-coherent, being partially coherent, and being fully coherent that are mentioned in Table 7 correspond to the non-coherent codeword, the partially coherent codeword, and the fully coherent codeword in Table 3 to Table 6. For example, in Table 7, the first index 0 indicates 1 layer: TPMI=0, corresponding to the non-coherent codeword indicated by TPMI=0 in Table 3, and the codeword may be applied to cases in which transmit antenna ports are fully coherent, partially coherent, and non-coherent. In Table 7, the first index 19 indicates 1 layer: TPMI=11, corresponding to the partially coherent codeword indicated by TPMI=11 in Table 3, and the codeword may be applied to cases in which transmit antenna ports are fully coherent and partially coherent. In Table 7, the first index 32 indicates 1 layer: TPMI=12, corresponding to the fully coherent codeword indicated by TPMI=12 in Table 3, and the codeword may be applied to a case in which transmit antenna ports are fully coherent.

It may be understood that an ellipsis "..." in Table 7 indicates that a first index between a first index preceding the ellipsis and a 1st first index following the ellipsis is omitted. For example, the first indexes 5 to 8 are omitted between the first index 4 and the first index 9, where a quantity of layers (or referred to as a quantity of uplink transmission layers) indicated by each of the first indexes 5 to 8 is 2, and TPMIs are in ascending order. To be specific, the first index 5 specifically indicates 2 layers: TPMI=1; the first index 6 specifically indicates 2 layers: TPMI=2; the first index 7 specifically indicates 2 layers: TPMI=3; and the first index 8 specifically indicates 2 layers: TPMI=4.

It may be understood that if the codebook (for example, Table 1 to Table 6) predefined in the 3GPP protocol includes the uplink precoding matrix calculated by the access network device, that is, the uplink precoding matrix calculated by the access network device is a codeword in the codebook predefined in the 3GPP protocol, the codeword selected by the access network device is consistent with the calculated uplink precoding matrix. If the codebook predefined in the 3GPP protocol does not include the uplink precoding matrix calculated by the access network device, that is, the uplink precoding matrix calculated by the access network device is not a codeword in the codebook predefined in the 3GPP protocol, the codeword selected by the access network device may be a codeword that has a smallest difference from the uplink precoding matrix calculated by the access network device. For example, the smallest difference may be that a Euclidean distance between the codeword selected by the access network device in the codebook predefined in the 3GPP protocol and the uplink precoding matrix calculated by the access network device is the smallest. Alternatively, the smallest difference may be that the codeword selected by the access network device in the codebook predefined in the 3GPP protocol and the uplink precoding matrix calculated by the access network device have a largest quantity of same elements.

In addition, it may be understood that, that the terminal device precodes the uplink data by using different codewords is equivalent to that the terminal device sends the uplink data by using different beam patterns (beam patterns). In other words, in any one of the foregoing Table 1 to Table 6, one column in each codeword corresponds to one beam pattern. For example, a quantity of columns in a codeword in Table 1 is 1. That the access network device determines to select one of the six codewords in Table 1 may also be described as selecting one of six beam patterns and indicating the selected one to the terminal device, so that the terminal device can send the uplink data based on the beam pattern indicated by the access network device. For another example, a quantity of columns in a codeword in Table 4 is 2. That the access network device determines to select one of the 22 codewords in Table 4 may also be described as indicating a beam pattern corresponding to a 1st column of the selected codeword to the terminal device to send first-layer uplink data, and indicating a beam pattern corresponding to a 2nd column of the selected codeword to the terminal device to send second-layer uplink data.

(5) Full power transmission

Currently, the protocol defines three full power transmission solutions: fullpower, fullpowerMode1, and fullpowerMode2. The network device may configure the foregoing for the terminal device based on a capability of the terminal device by using RRC signaling.

In the full power transmission solution of fullpower, a power scaling coefficient of a PUSCH is fixed to 1, and all transmit antenna ports of the terminal device are required to support full power transmission. For example, a power amplifier (PA) corresponding to each antenna port of the terminal device may perform full power (full-rated) sending.

In the full power transmission solution of fullpowerMode1, when the terminal device performs uplink data transmission by using a fully coherent codeword, a power scaling coefficient of the PUSCH is 1, and full power transmission can be implemented. For example, based on the codebook subset shown in Table 7, a codeword supporting full power transmission may be added for some layers (rank) on which full power transmission cannot be performed. As shown in the following Table 8, in comparison with the "codebook subset=partially coherent and non-coherent" column in Table 7, indications of fully coherent codewords corresponding to one layer are added, for example, "1 layer: TPMI=13", "1 layer: TPMI=12", "1 layer: TPMI=14", and "1 layer: TPMI=15". For example, it is assumed that an optimal TPMI calculated by the network device is "1 layer: TPMI=0". To perform full power transmission, the network device may indicate "1 layer:

TPMI=13" to the terminal device, so that a power scaling coefficient that is of the PUSCH and that is calculated by the terminal device is 1. In addition, if the capability of the terminal device does not support fully coherent transmission, but performance losses are caused when a codeword corresponding to "1 layer: TPMI=13" is used for uplink transmission, in this scenario, the terminal device may use, for example, a solution like small delay cyclic delay diversity (small delay cyclic delay diversity) to reduce the performance losses.

Table 8

| First index | Codebook subset=partially coherent and non-coherent | First index | Codebook subset=non-coherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | | ... | |
| 3 | 1 layer: TPMI=3 | 3 | 1 layer: TPMI=3 |
| 4 | 2 layers: TPMI=0 | 4 | 2 layers: TPMI=0 |
| ... | | ... | |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 2 layers: TPMI=1 | 14 | 3 layers: TPMI=1 |
| 15 | 1 layer: TPMI=4 | 15 | Reserved bit |
| ... | | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| ... | | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |
| 36 to 63 | Reserved bit | | |

In the full power transmission solution of fullpowerMode2, a terminal device whose transmit antenna ports are non-coherent or partially coherent is allowed to implement full power PUSCH transmission based on a power amplifier PA corresponding to one transmit antenna port and a specific codeword; or a terminal device whose transmit antenna ports are non-coherent or partially coherent is allowed to implement full power PUSCH transmission based on a sum of PAs corresponding to some (a plurality of) transmit antenna ports and a specific codeword. First, the terminal device reports, to the network device, codewords that can be used for full power sending, and power scaling coefficients of the PUSCH that correspond to the codewords used by the terminal device are 1, to implement full power PUSCH transmission. In an example, the following Table 9 shows codeword sets that correspond to four transmit antenna ports and that support full power transmission.

Table 9

| TPMI set | |
|---|---|
| G0 | $\frac{1}{2}\begin{bmatrix}1\\0\\0\\0\end{bmatrix}$ |
| G1 | $\frac{1}{2}\begin{bmatrix}1\\0\\0\\0\end{bmatrix}$, $\frac{1}{2}\begin{bmatrix}0\\0\\1\\0\end{bmatrix}$, and $\frac{1}{2}\begin{bmatrix}1&0\\0&0\\0&1\\0&0\end{bmatrix}$ |
| G2 | $\frac{1}{2}\begin{bmatrix}1\\0\\0\\0\end{bmatrix}$, $\frac{1}{2}\begin{bmatrix}0\\1\\0\\0\end{bmatrix}$, $\frac{1}{2}\begin{bmatrix}0\\0\\1\\0\end{bmatrix}$, $\frac{1}{2}\begin{bmatrix}1&0\\0&0\\0&1\\0&0\end{bmatrix}$, $\frac{1}{2}\begin{bmatrix}1&0\\0&1\\0&0\\0&0\end{bmatrix}$, $\frac{1}{2}\begin{bmatrix}0&0\\1&0\\0&1\\0&0\end{bmatrix}$, and $\frac{1}{2}\begin{bmatrix}1&0&0\\0&1&0\\0&0&1\\0&0&0\end{bmatrix}$ |
| G3 | $\frac{1}{2}\begin{bmatrix}1&0\\0&0\\0&1\\0&0\end{bmatrix}$, $\frac{1}{2}\begin{bmatrix}1&0\\0&1\\0&0\\0&0\end{bmatrix}$, $\frac{1}{2}\begin{bmatrix}0&0\\1&0\\0&1\\0&0\end{bmatrix}$, and $\frac{1}{2}\begin{bmatrix}1&0&0\\0&1&0\\0&0&1\\0&0&0\end{bmatrix}$ |
| G4 | $\frac{1}{2}\begin{bmatrix}1\\0\\1\\0\end{bmatrix}$, $\frac{1}{2}\begin{bmatrix}1\\0\\-1\\0\end{bmatrix}$, $\frac{1}{2}\begin{bmatrix}1\\0\\j\\0\end{bmatrix}$, $\frac{1}{2}\begin{bmatrix}1\\0\\-j\\0\end{bmatrix}$, and $\frac{1}{2}\begin{bmatrix}1&0\\0&0\\0&1\\0&0\end{bmatrix}$ |
| G5 | $\frac{1}{2}\begin{bmatrix}1\\0\\1\\0\end{bmatrix}$, $\frac{1}{2}\begin{bmatrix}1\\0\\-1\\0\end{bmatrix}$, $\frac{1}{2}\begin{bmatrix}1\\0\\j\\0\end{bmatrix}$, $\frac{1}{2}\begin{bmatrix}1\\0\\-j\\0\end{bmatrix}$, $\frac{1}{2}\begin{bmatrix}1&0\\0&0\\0&1\\0&0\end{bmatrix}$, $\frac{1}{2}\begin{bmatrix}1&0\\0&1\\0&0\\0&0\end{bmatrix}$, $\frac{1}{2}\begin{bmatrix}0&0\\1&0\\0&1\\0&0\end{bmatrix}$, and $\frac{1}{2}\begin{bmatrix}1&0&0\\0&1&0\\0&0&1\\0&0&0\end{bmatrix}$ |
| G6 | $\frac{1}{2}\begin{bmatrix}1\\0\\1\\0\end{bmatrix}$, $\frac{1}{2}\begin{bmatrix}1\\0\\-1\\0\end{bmatrix}$, $\frac{1}{2}\begin{bmatrix}1\\0\\j\\0\end{bmatrix}$, $\frac{1}{2}\begin{bmatrix}1\\0\\-j\\0\end{bmatrix}$, $\frac{1}{2}\begin{bmatrix}0\\1\\0\\1\end{bmatrix}$, $\frac{1}{2}\begin{bmatrix}0\\1\\0\\-1\end{bmatrix}$, $\frac{1}{2}\begin{bmatrix}0\\1\\0\\j\end{bmatrix}$, $\frac{1}{2}\begin{bmatrix}0\\1\\0\\-j\end{bmatrix}$, $\frac{1}{2}\begin{bmatrix}1&0\\0&1\\0&0\\0&0\end{bmatrix}$, $\frac{1}{2}\begin{bmatrix}1&0\\0&0\\0&1\\0&0\end{bmatrix}$, $\frac{1}{2}\begin{bmatrix}1&0\\0&0\\0&0\\0&1\end{bmatrix}$, $\frac{1}{2}\begin{bmatrix}0&0\\1&0\\0&1\\0&0\end{bmatrix}$, $\frac{1}{2}\begin{bmatrix}0&0\\1&0\\0&0\\0&1\end{bmatrix}$, $\frac{1}{2}\begin{bmatrix}0&0\\0&0\\1&0\\0&1\end{bmatrix}$, and $\frac{1}{2}\begin{bmatrix}1&0&0\\0&1&0\\0&0&1\\0&0&0\end{bmatrix}$ |

It can be learned from the technical terms described above that the current 3GPP protocol supports a codeword indicated by the access network device in corresponding to a maximum quantity 4 of uplink transmission layers and a maximum quantity 4 of transmit antenna ports (that is, 4Tx). With development of antenna technologies, the terminal device supports more transmit antenna ports. For example, the quantity of transmit antenna ports of the terminal device may be further increased to 8 or 16. It can be learned that the quantity of transmit antenna ports used by the terminal device may exceed the maximum quantity of transmit antenna ports corresponding to the codeword that is supported by the current 3GPP protocol. Correspondingly, the quantity of uplink transmission layers may also exceed the maximum quantity of transmission layers corresponding to the codeword that is supported by the current 3GPP protocol. If a manner of selecting the codeword from the codebook predefined in the current 3GPP protocol and indicating the codeword to the terminal device is still used, the manner cannot adapt to more transmit antenna ports, and it is difficult to effectively apply a massive-MIMO technology to the terminal device. Consequently, uplink transmission performance is limited.

Based on this, an embodiment of this application provides an uplink precoding indication method. For a terminal device that supports a quantity of antenna ports greater than 4, an uplink precoding matrix that meets the quantity of transmit antenna ports of the terminal device is generated based on a predefined codeword that meets the foregoing full power transmission of fullpowerMode1 or fullpowerMode2, to implement full power PUSCH transmission on a terminal device side, and effectively improve uplink transmission performance.

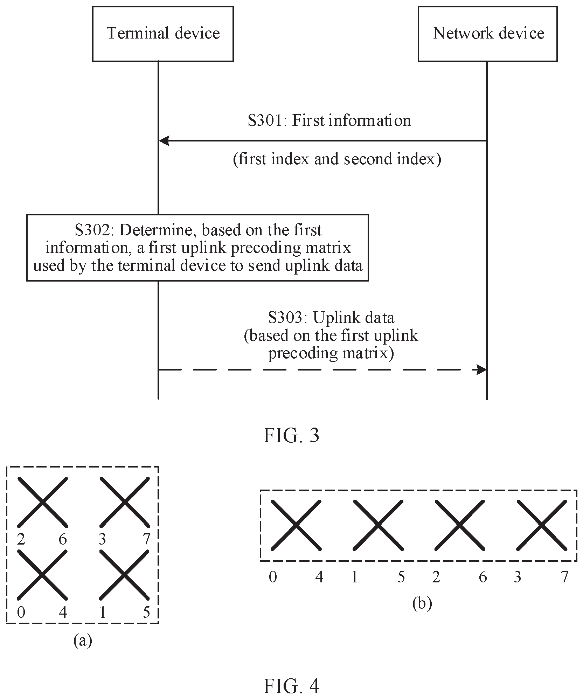

Refer to FIG. 3. An embodiment of this application provides an uplink precoding indication method that may be used to implement a solution of full power transmission of fullpowerMode1. The method mainly includes the following procedure.

S301: A network device sends first information to a terminal device.

The first information indicates M predefined codewords, transmit antenna ports corresponding to any one of the M predefined codewords are fully coherent, and M is a positive integer. The M predefined codewords are used to determine a first uplink precoding matrix used by the terminal device to send uplink data, and a quantity of columns corresponding to any one of the M predefined codewords is less than or equal to a quantity of uplink transmission layers corresponding to the first uplink precoding matrix. It may be understood that a quantity of transmit antenna ports corresponding to the first uplink precoding matrix is a quantity of transmit antenna ports used by the terminal device to send the uplink data, and the quantity of uplink transmission layers corresponding to the first uplink precoding matrix is a quantity of uplink transmission layers to which the uplink data to be sent by the terminal device is mapped. Optionally, the terminal device may determine, based on a measurement result of a reference signal of an uplink channel, the quantity of transmit antenna ports used by the terminal device to send the uplink data and the quantity of uplink transmission layers to which the uplink data to be sent by the terminal device is mapped.

Specifically, a coherence capability of the terminal device is partially coherent 1. All transmit antenna ports of the terminal device may be grouped into two antenna port groups that are denoted as a first antenna port group and a second antenna port group. A quantity of transmit antenna ports included in the first antenna port group is the same as a quantity of transmit antenna ports included in the second antenna port group. The M predefined codewords are used to determine precoding information of the first antenna port group and/or precoding information of the second antenna port group in the first uplink precoding matrix. Optionally, each of the M predefined codewords may be a codeword in the foregoing codebook predefined in the 3GPP protocol, or may be another predefined codeword. In this embodiment of this application, an example in which the predefined codeword is the codeword in the codebook predefined in the 3GPP protocol is used for description below. It should be understood that the predefined codeword may be prestored in the network device and the terminal device according to the 3GPP protocol; may be prestored in the network device and sent by the network device to the terminal device after the terminal device accesses a network; or may be prestored in the terminal device and sent by the terminal device to the network device after the terminal device accesses the network. This is not specifically limited in this embodiment of this application.

Optionally, polarization directions of at least two of a plurality of transmit antenna ports included in the first antenna port group are different, and polarization directions of at least two of a plurality of transmit antenna ports included in the second antenna port group are different. In an example, (a) and (b) in FIG. 4 show eight transmit antenna ports of the terminal device, and the transmit antenna ports are numbered 0 to 7. The first antenna port group includes transmit antenna ports numbered {0, 1, 4, 5}, and the second antenna port group includes transmit antenna ports numbered {2, 3, 6, 7}. Any one of the M predefined codewords corresponds to four transmit antenna ports, or it may be described as that any one of the M predefined codewords is a fully coherent 4Tx codeword. For example, codebooks shown in Table 3 to Table 6 have a total of 30 fully coherent 4Tx codewords, and one of the M predefined codewords may be one of the 30 fully coherent 4Tx codewords.

Specifically, the network device may include a first index and a second index in the first information, to indicate the corresponding M predefined codewords. It may be understood that the first index and the second index may have a plurality of groups of values, different groups of values correspond to different M predefined codewords, and the network device may include one of the plurality of groups of values in the first information. The following describes in detail the plurality of groups of values of the first index and the second index.

Manner 31: A value of the first index belongs to a first index interval, and a value of the second index belongs to a second index interval. In this case, M is 1, and the first information indicates a first predefined codeword. The first predefined codeword is used to determine the precoding information of the first antenna port group, and the precoding information of the second antenna port group is 0. The quantity of uplink transmission layers corresponding to the first uplink precoding matrix is the same as a quantity of columns corresponding to the first predefined codeword. Optionally, the first index interval is determined based on a quantity of fully coherent predefined codewords.

For example, the quantity of transmit antenna ports of the terminal device is 8, and the first predefined codeword is one of the 30 fully coherent 4Tx codewords. The 30 fully coherent 4Tx codewords are arranged in ascending order of quantities of uplink transmission layers. The first index interval may be from 0 to 29, and the value of the first index is one integer from 0 to 29. The second index interval may be from 30 to 31, and the value of the second index is one integer from 30 to 31. Based on this, the network device may set 10 bits (bits) in the first information to indicate the first index and the second index, first 5 bits in the 10 bits indicate the value of the first index, and last 5 bits in the 10 bits indicate the value of the second index. It may be understood that the first index corresponds to a specific quantity of layers and a specific TPMI. For example, the first index is 0, and corresponds to a codeword indicated by "1 layer: TPMI=12" in Table 3.

Manner 32: A value of the first index belongs to a second index interval, and a value of the second index belongs to a first index interval. In this case, M is 1, and the first information indicates a second predefined codeword. The second predefined codeword is used to determine the precoding information of the second antenna port group, and the precoding information of the first antenna port group is 0. The quantity of uplink transmission layers corresponding to the first uplink precoding matrix is the same as a quantity of columns corresponding to the second predefined codeword. Optionally, the first index interval is determined based on a quantity of fully coherent predefined codewords.

For example, the quantity of transmit antenna ports of the terminal device is 8, and the second predefined codeword is one of the 30 fully coherent 4Tx codewords. The 30 fully coherent 4Tx codewords are arranged in ascending order of quantities of uplink transmission layers. The first index interval may be from 0 to 29, and the value of the second index is one integer from 0 to 29. The second index interval may be from 30 to 31, and the value of the first index is one integer from 30 to 31. Based on this, the network device may set 10 bits (bits) in the first information to indicate the first index and the second index, first 5 bits in the 10 bits indicate the value of the first index, and last 5 bits in the 10 bits indicate the value of the second index. It may be understood that the second index corresponds to a specific quantity of layers and a specific TPMI. For example, the second index is 29, and corresponds to a codeword indicated by "4 layers: TPMI=4" in Table 6.

Manner 33: A value of the first index belongs to a first index interval, and a value of the second index belongs to the first index interval. In this case, M is 2, the first index in the first information indicates a third predefined codeword, and the second index indicates a fourth predefined codeword. Optionally, the first predefined codeword is used to determine the precoding information of the first antenna port group, and the second predefined codeword is used to determine the precoding information of the second antenna port group. The quantity of uplink transmission layers corresponding to the first uplink precoding matrix is equal to a sum of a quantity of columns corresponding to the first predefined codeword and a quantity of columns corresponding to the second predefined codeword. Optionally, the first index interval is determined based on a quantity of fully coherent predefined codewords.

For example, the quantity of transmit antenna ports of the terminal device is 8, and the first predefined codeword and the second predefined codeword each are one of the 30 fully coherent 4Tx codewords. The 30 fully coherent 4Tx codewords are arranged in ascending order of quantities of uplink transmission layers. The first index interval may be from 0 to 29. The value of the first index is one integer from 0 to 29, and the value of the second index is one integer from 0 to 29. Based on this, the network device may set 10 bits (bits) in the first information to indicate the first index and the second index, first 5 bits in the 10 bits indicate the value of the first index, and last 5 bits in the 10 bits indicate the value of the second index.

It is assumed that the quantity of uplink transmission layers used by the terminal device for uplink data transmission is 3, the third predefined codeword may be a fully coherent 4Tx codeword corresponding to a quantity 2 of uplink transmission layers, and the fourth predefined codeword may be a fully coherent 4Tx codeword corresponding to a quantity 1 of uplink transmission layers. The first index corresponds to a specific quantity of layers and a specific TPMI. For example, the first index is 23, and corresponds to a codeword indicated by "2 layers: TPMI=21" in Table 4. The second index corresponds to a specific quantity of layers and a specific TPMI. For example, the second index is 0, and corresponds to a codeword indicated by "1 layer: TPMI=12" in Table 3.

Manner 34: In the first information, a value of the first index belongs to a second index interval, and a value of the second index belongs to the second index interval. In this case, M is 1, the first index and the second index jointly indicate a fifth predefined codeword, the fifth predefined codeword is used to determine the precoding information of the first antenna port group and the precoding information of the second antenna port group, the precoding information of the first antenna port group is the same as the precoding information of the second antenna port group, and a quantity of uplink transmission layers or the like corresponding to the first uplink precoding matrix is 1.

For example, the quantity of transmit antenna ports of the terminal device is 8. A codebook shown in Table 10-1 may be predefined, and includes eight one-layer fully coherent 8Tx codewords. Any codeword in Table 10-1 meets the following: In a scenario in which the transmit antenna ports of the terminal device are grouped into the first antenna port group {0, 1, 4, 5} and the second antenna port group {2, 3, 6, 7}, the precoding information of the first antenna port group is the same as the precoding information of the second antenna port group.

Table 10-1

| Number | One-layer fully coherent 8Tx codeword |
|---|---|
| 0 to 7 | $\dfrac{1}{2\sqrt{2}}\begin{bmatrix}1\\1\\1\\1\\1\\1\\1\\1\end{bmatrix}$ $\dfrac{1}{2\sqrt{2}}\begin{bmatrix}1\\1\\1\\1\\j\\j\\j\\j\end{bmatrix}$ $\dfrac{1}{2\sqrt{2}}\begin{bmatrix}1\\1\\1\\1\\-1\\-1\\-1\\-1\end{bmatrix}$ $\dfrac{1}{2\sqrt{2}}\begin{bmatrix}1\\1\\1\\1\\-j\\-j\\-j\\-j\end{bmatrix}$ $\dfrac{1}{2\sqrt{2}}\begin{bmatrix}1\\-1\\1\\-1\\1\\-1\\1\\-1\end{bmatrix}$ $\dfrac{1}{2\sqrt{2}}\begin{bmatrix}1\\-1\\1\\-1\\j\\-j\\j\\-j\end{bmatrix}$ $\dfrac{1}{2\sqrt{2}}\begin{bmatrix}1\\-1\\1\\-1\\-1\\1\\-1\\1\end{bmatrix}$ $\dfrac{1}{2\sqrt{2}}\begin{bmatrix}1\\-1\\1\\-1\\-j\\j\\-j\\j\end{bmatrix}$ |

In an optional implementation, the network device may directly configure one or more "one-layer fully coherent 8Tx codewords" in Table 10-1, and the fifth predefined codeword is one codeword in Table 10. The network device may set the second index interval from 30 to 31.

For example, if only the 8Tx codeword numbered 0 in Table 10-1 is configured (or referred to as being predefined), the fifth predefined codeword jointly indicated by the first index and the second index may be understood as the 8Tx codeword numbered 0 in Table 10-1. The network device may set 10 bits (bits) in the first information to indicate the first index and the second index, first 5 bits in the 10 bits indicate the value of the first index, for example, 30, and last 5 bits in the 10 bits indicate the value of the second index, for example, 30.

If the 8Tx codewords numbered 0 to 3 in Table 10-1 are configured (or referred to as being predefined), for the 8Tx codeword numbered 0, the fifth predefined codeword jointly indicated by the first index and the second index may be understood as the 8Tx codeword numbered 0 in Table 10-1, where in the first information, the first index occupies 5 bits and has a value of 31, and the second index occupies 5 bits and has a value of 31; for the 8Tx codeword numbered 1, the fifth predefined codeword jointly indicated by the first index and the second index may be understood as the 8Tx codeword numbered 1 in Table 10-1, where in the first information, the first index occupies 5 bits and has a value of 30, and the second index occupies 5 bits and has a value of 30; for the 8Tx codeword numbered 2, the fifth predefined codeword jointly indicated by the first index and the second index may be understood as the 8Tx codeword numbered 2 in Table 10-1, where in the first information, the first index occupies 5 bits and has a value of 30, and the second index occupies 5 bits and has a value of 31; and for the 8Tx codeword numbered 3, the fifth predefined codeword jointly indicated by the first index and the second index may be understood as the 8Tx codeword numbered 3 in Table 10-1, where in the first information, the first index occupies 5 bits and has a value of 31, and the second index occupies 5 bits and has a value of 30.

In another optional implementation, one "one-layer fully coherent 8Tx codeword" in Table 10-1 is determined based on same two fully coherent 4Tx codewords whose quantity of uplink transmission layers is 1. In a scenario in which the quantity of transmit antenna ports of the terminal device is 8, the 30 fully coherent 4Tx codewords are arranged in ascending order of quantities of uplink transmission layers, a first index interval is from 0 to 29, and the second index interval may be from 30 to 31.

If only the 8Tx codeword numbered 0 in Table 10-1 is configured (or referred to as being predefined), the fifth predefined codeword jointly indicated by the first index and the second index may be understood as a 4Tx codeword indicated by "1 layer: TPMI=12". The network device may set 10 bits (bits) in the first information to indicate the first index and the second index, first 5 bits in the 10 bits indicate the value of the first index, for example, 30, and last 5 bits in the 10 bits indicate the value of the second index, for example, 30.

If the 8Tx codewords numbered 0 to 3 in Table 10-1 are configured (or referred to as being predefined), for the 8Tx codeword numbered 0, the fifth predefined codeword jointly indicated by the first index and the second index may be understood as a 4Tx codeword indicated by "1 layer: TPMI=12", where in the first information, the first index occupies 5 bits and has a value of 31, and the second index occupies 5 bits and has a value of 31; for the 8Tx codeword numbered 1, the fifth predefined codeword jointly indicated by the first index and the second index may be understood as a 4Tx codeword indicated by "1 layer: TPMI=13", where in the first information, the first index occupies 5 bits and has a value of 30, and the second index occupies 5 bits and has a value of 30; for the 8Tx codeword numbered 2, the fifth predefined codeword jointly indicated by the first index and the second index may be understood as a 4Tx codeword indicated by "1 layer: TPMI=14", where in the first information, the first index occupies 5 bits and has a value of 30, and the second index occupies 5 bits and has a value of 31; and for the 8Tx codeword numbered 3, the fifth predefined codeword jointly indicated by the first index and the second index may be understood as a 4Tx codeword indicated by "1 layer: TPMI=15", where in the first information, the first index occupies 5 bits and has a value of 31, and the second index occupies 5 bits and has a value of 30.

Manner 35: In the first information, a value of the first index belongs to a third index interval, a value of the second index belongs to a fourth index interval, and a fifth predefined codeword jointly indicated by the first index and the second index may be one of 8Tx codewords in Table 10-1, or another 8Tx codeword that supports full power transmission and whose quantity of columns is 1.

Specifically, in a scenario in which the quantity of transmit antenna ports of the terminal device is 8, quantities of columns respectively corresponding to the first antenna port group and the second antenna port group in the first uplink precoding matrix are determined based on column quantity allocation information corresponding to two antenna port groups shown in the following Table 10-2.

Table 10-2

| Rank | Column quantity allocation information corresponding to two antenna port groups (Layers split across 2 Antenna Groups) |
|---|---|
| 1 | (1, 0) or (0, 1) |
| 2 | (1, 0), (0, 1), or (1,1) |

(continued)

| Rank | Column quantity allocation information corresponding to two antenna port groups (Layers split across 2 Antenna Groups) |
|---|---|
| 3 | (3, 0), (0, 3), (1, 2), or (2, 1) |
| 4 | (4, 0), (0, 4), or (2, 2) |
| 5 | (2, 3) or (3, 2) |
| 6 | (3, 3) |
| 7 | (3, 4) or (4, 3) |

It can be learned from Table 10-2 that, when the quantity of uplink transmission layers (Rank) used by the terminal device to send the uplink data is 4, the column quantity allocation information corresponding to the two antenna port groups does not include (1, 3) and (3, 1). In other words, (1, 3) and (3, 1) are invalid column quantity allocation information. The network device may determine the third index interval and the fourth index interval based on the invalid column quantity allocation information.

For example, the 30 fully coherent 4Tx codewords in Table 3 to Table 6 are arranged in ascending order of numbers and quantities of uplink transmission layers in the tables, and are numbered 0 to 29. An index interval of a 4Tx codeword of the rank 1 is [0, 15], and an index interval of a 4Tx codeword of the rank 3 is [24, 27]. In a possible implementation, the third index interval is [0, 15], that is, the first index may indicate a 4Tx codeword of the rank 1; and the fourth index interval is [24, 27], that is, the first index may indicate a 4Tx codeword of the rank 3. In another possible implementation, the third index interval is [24, 27], that is, the first index may indicate a 4Tx codeword of the rank 3; and the fourth index interval is [0, 15], that is, the first index may indicate a 4Tx codeword of the rank 1.

Correspondingly, the terminal device receives the first index and the second index in the first information, may determine that the first index and the second index are invalid column quantity allocation information, and determine the fifth predefined codeword based on the values of the first index and the second index. For example, when the value of the first index is 0, and the value of the second index is 24, the fifth predefined codeword indicated by the first index and the second index is the 8Tx codeword numbered 0 in Table 10-1. Alternatively, when one "one-layer fully coherent 8Tx codeword" is generated based on same two "one-layer fully coherent 4Tx codewords", for example, when the value of the first index is 0, and the value of the second index is 24, the fifth predefined codeword indicated by the first index and the second index is a 4Tx codeword indicated by "1 layer: TPMI=12", and the 4Tx codeword indicated by "1 layer: TPMI=12" corresponds to the 8Tx codeword numbered 0 in Table 10-1.

S302: The terminal device determines the first uplink precoding matrix based on the first information.

It can be learned from the descriptions in S301 that the first information includes the values of the first index and the second index, to indicate the M predefined codewords. The terminal device may determine the M predefined codewords by querying Table 3 to Table 7 based on the first information, and then determine the first uplink precoding matrix based on the M predefined codewords in a manner the same as that on a network device side.

For example, the quantity of transmit antenna ports of the terminal device is 8, and the transmit antenna ports are grouped into two antenna port groups such as the first antenna port group and the second antenna port group. The first uplink precoding matrix W may be understood with reference to the following structure (1):

$$W = \begin{bmatrix} P_{10} & 0 \\ P_{11} & 0 \\ 0 & P_{20} \\ 0 & P_{21} \\ P_{12} & 0 \\ P_{13} & 0 \\ 0 & P_{22} \\ 0 & P_{23} \end{bmatrix} \quad (1)$$

The precoding information corresponding to the first antenna port group is $\{P_{10}, P_{11}, P_{12}, P_{13}\}$, and the precoding information corresponding to the second antenna port group is $\{P_{20}, P_{21}, P_{22}, P_{23}\}$. A quantity of columns corresponding to the first antenna port group in the first uplink precoding matrix is x, and a quantity of columns corresponding to the second antenna port group in the first uplink precoding matrix is y, where a value of x or y is 0, or neither of values of x and y is 0.

In correspondence to the manner 31 in S301, x is not 0, and y is 0. The terminal device may determine, based on the first predefined codeword indicated in the first information, $\{P_{10}, P_{11}, P_{12}, P_{13}\}$ corresponding to the first antenna port group. For example, the first predefined codeword is a fully coherent 4Tx codeword, and includes four rows. $P_{10}$ is a 1st row of the first predefined codeword, $P_{11}$ is a 2nd row of the first predefined codeword, $P_{12}$ is a 3rd row of the first predefined codeword, and $P_{14}$ is a 4th row of the first predefined codeword. $\{P_{20}, P_{21}, P_{22}, P_{23}\}$ corresponding to the second antenna port group are all 0.

It may be understood that the quantity of uplink transmission layers corresponding to the first uplink precoding matrix is the same as the quantity of columns corresponding to the first predefined codeword. To be specific, the first antenna port group corresponds to all columns in the first uplink precoding matrix, and the second antenna port group corresponds to 0 columns in the first uplink precoding matrix. For example, the quantity of uplink transmission layers corresponding to the first uplink precoding matrix is 4, and (x, y)=(4, 0). Therefore, in the manner 31, the first uplink precoding matrix W may also be represented as the following result (2):

$$W=\begin{bmatrix} P_{10} \\ P_{11} \\ 0 \\ 0 \\ P_{12} \\ P_{13} \\ 0 \\ 0 \end{bmatrix} \quad (2)$$

In correspondence to the manner 32 in S301, x is 0, and y is not 0. The terminal device may determine, based on the second predefined codeword indicated in the first information, $\{P_{20}, P_{21}, P_{22}, P_{23}\}$ corresponding to the second antenna port group. For example, the second predefined codeword is a fully coherent 4Tx codeword, and includes four rows. $P_{20}$ is a 1st row of the second predefined codeword, $P_{21}$ is a 2nd row of the second predefined codeword, $P_{22}$ is a 3rd row of the second predefined codeword, and $P_{24}$ is a 4th row of the second predefined codeword. $\{P_{10}, P_{11}, P_{12}, P_{13}\}$ corresponding to the first antenna port group are all 0.

It may be understood that the quantity of uplink transmission layers corresponding to the first uplink precoding matrix is the same as the quantity of columns corresponding to the second predefined codeword. To be specific, the second antenna port group corresponds to all columns in the first uplink precoding matrix, and the first antenna port group corresponds to 0 columns in the first uplink precoding matrix. For example, the quantity of uplink transmission layers corresponding to the first uplink precoding matrix is 4, and (x, y)=(0, 4). Therefore, in the manner 32, the first uplink precoding matrix W may also be represented as the following result (3):

$$W=\begin{bmatrix} 0 \\ 0 \\ P_{20} \\ P_{21} \\ 0 \\ 0 \\ P_{22} \\ P_{23} \end{bmatrix} \quad (3)$$

In correspondence to the manner 33 in S301, x is not 0, and y is not 0. The terminal device may determine, based on the third predefined codeword indicated in the first information, $\{P_{10}, P_{11}, P_{12}, P_{13}\}$ corresponding to the first antenna port group, and determine, based on the fourth predefined codeword indicated in the first information, $\{P_{20}, P_{21}, P_{22}, P_{23}\}$ corresponding to the second antenna port group. The first antenna port group corresponds to x columns in the first uplink precoding matrix, and the second antenna port group corresponds to y columns in the first uplink precoding matrix. For example, the quantity of uplink transmission layers corresponding to the first uplink precoding matrix is 4, and (x, y)=(2, 2), (x, y)=(1, 3), or (x, y)=(3, 1).

In correspondence to the manner 34 or the manner 35 in S301, the terminal device may determine, based on the first index and the second index in the first information, the fifth predefined codeword indicated in the first information. For example, the quantity of transmit antenna ports of the terminal device is 8. In an optional implementation, if the fifth predefined codeword is an 8Tx codeword in Table 10-1, the terminal device may determine the fifth predefined codeword as the first uplink precoding matrix. In another optional implementation, if the fifth predefined codeword is a one-layer fully coherent 4Tx codeword, the terminal device may determine the first uplink precoding matrix based on two fifth predefined codewords, where one fifth predefined codeword corresponds to one antenna port group of the first uplink precoding matrix.

S303: The terminal device sends the uplink data to the access network device based on the first uplink precoding matrix.

The terminal device may precode the uplink data based on the first uplink precoding matrix, and then send precoded uplink data to the access network device.

In the foregoing method provided in this embodiment of this application, based on a fully coherent 4Tx codeword, an uplink precoding matrix that is adapted to a larger quantity (for example, 8) of uplink transmit antenna ports is flexibly generated, and meets a requirement of full power transmission of fullpowerMode1. This helps improve uplink transmission efficiency and performance. The method is applied to an 8Tx precoding scenario. The network device may indicate the M predefined codewords by using a maximum of 10 bits, to reduce indication overheads.

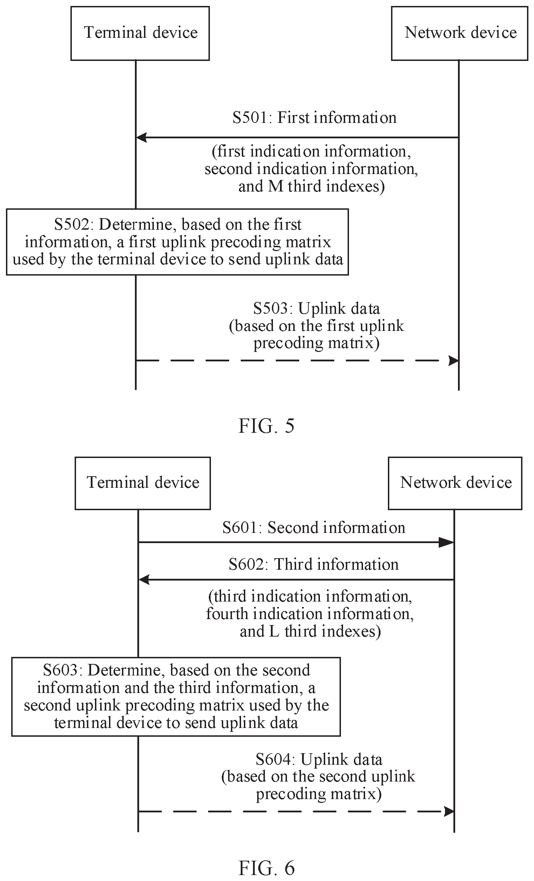

Refer to FIG. 5. An embodiment of this application provides an uplink precoding indication method that may be used to implement a second solution of full power transmission of fullpowerMode1. The method mainly includes the following procedure.

S501: A network device sends first information to a terminal device.

The first information indicates M predefined codewords, transmit antenna ports corresponding to any one of the M predefined codewords are fully coherent, and M is a positive integer. The M predefined codewords are used to determine a first uplink precoding matrix used by the terminal device to send uplink data, and a quantity of columns corresponding to any one of the M predefined codewords is less than or equal to a quantity of uplink transmission layers corresponding to the first uplink precoding matrix. It may be understood that a quantity of transmit antenna ports corresponding to the first uplink precoding matrix is a quantity of transmit antenna ports used by the terminal device to send the uplink data, and the quantity of uplink transmission layers corresponding to the first uplink precoding matrix is a quantity of uplink transmission layers to which the uplink data to be sent by the terminal device is mapped. Optionally, the terminal device may determine, based on a measurement result of a reference signal of an uplink channel, the quantity of transmit antenna ports used by the terminal device to send the uplink data and the quantity of uplink transmission layers to which the uplink data to be sent by the terminal device is mapped.

Specifically, a coherence capability of the terminal device is partially coherent 2. All transmit antenna ports of the terminal device may be grouped into four antenna port groups. All of the antenna port groups include a same quantity of transmit antenna ports. The M predefined codewords are used to determine precoding information of a part or all of antenna port groups in the first uplink precoding matrix. Optionally, each of the M predefined codewords may be a codeword in the foregoing codebook predefined in the 3GPP protocol, or may be another predefined codeword. In this embodiment of this application, an example in which the predefined codeword is the codeword in the codebook predefined in the 3GPP protocol is used for description below. It should be understood that the predefined codeword may be prestored in the network device and the terminal device according to the 3GPP protocol; may be prestored in the network device and sent by the network device to the terminal device after the terminal device accesses a network; or may be prestored in the terminal device and sent by the terminal device to the network device after the terminal device accesses the network. This is not specifically limited in this embodiment of this application.

Optionally, polarization directions of at least two of a plurality of transmit antenna ports included in any one of the four antenna port groups are different. In an example, (a) and (b) in FIG. 4 show eight transmit antenna ports of the terminal device, and the transmit antenna ports are numbered 0 to 7. In the four antenna port groups, a 1st antenna port group includes transmit antenna ports numbered {0, 4}, a 2nd antenna port group includes transmit antenna ports numbered {1, 5}, a 3rd antenna port group includes transmit antenna ports numbered {2, 6}, and a 4th antenna port group includes transmit antenna ports numbered {3, 7}. Any one of the M predefined codewords corresponds to two transmit antenna ports, or it may be described as that any one of the M predefined codewords is a fully coherent 2Tx codeword. For example, codebooks shown in Table 1 and Table 2 have a total of six fully coherent 2Tx codewords, and one of the M predefined codewords may be one of the six fully coherent 4Tx codewords.

For example, the quantity of transmit antenna ports corresponding to the first uplink precoding matrix is 8, and a maximum quantity of uplink transmission layers (Rank) corresponding to the first uplink precoding matrix is 8. A quantity of columns corresponding to each of the four antenna port groups in the first uplink precoding matrix may be understood with reference to descriptions in the following Table 11. Optionally, the quantity of uplink transmission layers corresponding to the first uplink precoding matrix may also be understood as a total quantity of streams of the terminal device, and Table 11 may also be understood as stream quantity allocation information corresponding to the four antenna port groups.

Table 11

| Rank | Column quantity allocation information corresponding to four antenna port groups (Layers split across 4 Antenna Groups) |
|---|---|
| 1 | A quantity of columns corresponding to one of the four antenna port groups is not 0 (1, 0, 0, 0), (0, 1, 0, 0), (0, 0, 1, 0), or (0, 0, 0, 1) |
| 2 | A quantity of columns corresponding to one of the four antenna port groups is not 0 (2, 0, 0, 0), (0, 2, 0, 0), (0, 0, 2, 0), or (0, 0, 0, 2)<br>A quantity of columns corresponding to two of the four antenna port groups is not 0 (1, 1, 0, 0), (1, 0, 1, 0), (1, 0, 0, 1), (0, 1, 1, 0), (0, 1, 0, 1), or (0, 0, 1, 1) |
| 3 | A quantity of columns corresponding to two of the four antenna port groups is not 0 (2, 1, 0, 0), (2, 0, 1, 0), (2, 0, 0, 1), (0, 2, 1, 0), (0, 2, 0, 1), or (0, 0, 2, 1)<br>A quantity of columns corresponding to three of the four antenna port groups is not 0 (1, 1, 1, 0), (1, 1, 0, 1), (1, 0, 1, 1), or (0, 1, 1, 1) |
| 4 | A quantity of columns corresponding to two of the four antenna port groups is not 0 (2, 2, 0, 0), (2, 0, 2, 0), (2, 0, 0, 2), (0, 2, 2, 0), (0, 2, 0, 2), or (0, 0, 2, 2)<br>A quantity of columns corresponding to none of the four antenna port groups is 0 (1, 1, 1, 1) |
| 5 | A quantity of columns corresponding to three of the four antenna port groups is not 0 (2, 0, 2, 1) or (0, 2, 2, 1)<br>A quantity of columns corresponding to none of the four antenna port groups is 0 (1, 1, 2, 1) |
| 6 | A quantity of columns corresponding to three of the four antenna port groups is not 0 (2, 2, 2, 0) or (2, 0, 2, 2)<br>A quantity of columns corresponding to none of the four antenna port groups is 0 (2, 1, 2, 1) |
| 7 | A quantity of columns corresponding to none of the four antenna port groups is 0 (2, 1, 2, 2) |
| 8 | (2, 2, 2, 2) |

Specifically, the network device may include one or more of first indication information, second indication information, and M third indexes in the first information. The first indication information indicates the quantity of uplink transmission layers corresponding to the first uplink precoding matrix. For example, the first indication information includes a value of the quantity of uplink transmission layers corresponding to the first uplink precoding matrix, or the first indication information indicates a value relationship between the quantity of uplink transmission layers corresponding to the first uplink precoding matrix and N, where N is a maximum quantity of uplink transmission layers corresponding to the predefined codeword. For example, in codebooks shown in Table 1 to Table 6, N is 4, and the first indication information specifically indicates that the quantity of uplink transmission layers corresponding to the first uplink precoding matrix is less than or equal to 4, the first indication information specifically indicates whether the quantity of uplink transmission layers corresponding to the first uplink precoding matrix is equal to 4, or the first indication information specifically indicates that the quantity of uplink transmission layers corresponding to the first uplink precoding matrix is greater than 4. In addition, optionally, if the terminal device determines a range of the quantity of streams based on an enabling status of a transport block, for example, the terminal device determines, based on the enabling status of the transport block, that the quantity of streams is less than or equal to 4 or greater than 4, the network device may not include the first indication information in the first information. It may be understood that the quantity of streams may be replaced with the quantity of uplink transmission layers used by the terminal device to send the uplink data, or the quantity of uplink transmission layers corresponding to the first uplink precoding matrix. In other words, that the terminal device determines the range of the quantity of streams based on the enabling status of the transport block is equivalent to determining a range of the quantity of uplink transmission layers.

The second indication information indicates that a quantity of columns corresponding to P antenna port groups in the four antenna port groups in the first uplink precoding matrix is 1, a value of P is determined based on first column quantity allocation information corresponding to the first uplink precoding matrix, and the first column quantity allocation information indicates a quantity of columns corresponding to each of the four antenna port groups in the first uplink precoding matrix. For example, a total quantity of transmit antenna ports of the terminal device is 8. Assuming that a first quantity of uplink transmission layers corresponding to the first uplink precoding matrix is 3, the first column quantity allocation information may be a type of column quantity allocation information corresponding to the four antenna port groups corresponding to the quantity (3) of uplink transmission layers corresponding to a first coding matrix in Table 11. For example, when P is 1, the first column quantity allocation information indicates one of (2, 1, 0, 0), (2, 0, 1, 0), (2, 0, 0, 1), (0, 2, 1, 0), (0, 2, 0, 1), and (0, 0, 2, 1).

Index information of the M predefined codewords may include the first column quantity allocation information corresponding to the first uplink precoding matrix and/or the M third indexes, and the M third indexes are in one-to-one correspondence with the M predefined codewords. The first column quantity allocation information indicates column quantity allocation information corresponding to each of the four antenna port groups in the first uplink precoding matrix, and one of the M third indexes indicates a quantity of columns and a TPMI that correspond to one of the M predefined codewords.

It may be understood that the M predefined codewords are used to determine precoding information of at least M antenna port groups in the four antenna port groups, and a quantity of columns corresponding to the at least M antenna port groups in the four antenna port groups in the first uplink precoding matrix is greater than 0. For example, it is assumed that the total quantity of transmit antenna ports of the terminal device is 8, the first quantity of uplink transmission layers corresponding to the first uplink precoding matrix is 3, and P is 1. If the first column quantity allocation information indicates (2, 1, 0, 0) in Table 11, and a value of M is 2, the two predefined codewords are used to determine precoding information of a $1^{st}$ antenna port group and precoding information of a $2^{nd}$ antenna port group in the first uplink precoding matrix. Alternatively, if the first column quantity allocation information indicates (1, 1, 0, 0) in Table 11, and a value of M is 1, the one predefined codeword is used to determine precoding information of a $1^{st}$ antenna port group and precoding information of a $2^{nd}$ antenna port group in the first uplink precoding matrix, and the precoding information of the $1^{st}$ antenna port group is the same as the precoding information of the $2^{nd}$ antenna port group.

For ease of implementation, the following uses an example in which the quantity of transmit antenna ports of the terminal device is 8. The network device may send the first information based on the quantity of transmit antenna ports, the quantity of uplink transmission layers, and the corresponding column quantity allocation information in Table 11 that are used when the terminal device sends the uplink data. Some content and meanings included in the first information may be understood with reference to the following manner 51 or manner 52:

Manner 51: The quantity of uplink transmission layers corresponding to the first uplink precoding matrix or the quantity of uplink transmission layers used by the terminal device to send the uplink data is denoted as a rank. In the manner 51, when the rank≤4, the content and the meanings included in the first information are mainly described as follows:

The first information includes the second indication information, the second indication information occupies 2 bits to indicate the value of P, a value range of P includes 0, 1, 2, 3, and 4, any one of the M predefined codewords is a fully coherent 2Tx codeword, and the index information of the M predefined codewords occupies 8 bits. Specifically, content indicated by the 8 bits is understood with reference to the following content:

When P=4, the quantity of transmission layers corresponding to the first uplink precoding matrix is 4, and the first column quantity allocation information indicates (1, 1, 1, 1). The index information of the M predefined codewords in the first information may include only the M third indexes, and a value of M may be 4. One of the four third indexes indicates one fully coherent 2Tx codeword in Table 1, a quantity of fully coherent 2Tx codewords in Table 1 is 4, only the fully coherent 2Tx codewords in Table 1 are renumbered 0 to 3, and a value range of the third index is also 0 to 3. In this case, in the first information, the 8 bits may be used to indicate a predefined codeword corresponding to each antenna port group, and every two of the 8 bits correspond to a value of one of the four third indexes.

When P=3, the quantity of transmission layers corresponding to the first uplink precoding matrix is 3, and the first column quantity allocation information indicates one of (1, 1, 1, 0), (1, 1, 0, 1), (1, 0, 1, 1), and (0, 1, 1, 1). A value of M may be 3, that is, the first information includes three third indexes. One of the three third indexes indicates one "rank 1: 2Tx" in Table 1. Because there are four "rank 1: 2Tx" in Table 1, only fully coherent 2Tx codewords in Table 1 are renumbered 0 to 3, and a value range of the third index is also 0 to 3. Based on this, in the first information, the 8 bits may be used to indicate predefined codewords corresponding to three of the four antenna port groups. First, first two of the 8 bits indicate which one of (1, 1, 1, 0), (1, 1, 0, 1), (1, 0, 1, 1), and (0, 1, 1, 1) is the first column quantity allocation information, and then last six of the 8 bits indicate values of the three third indexes. For example, the first two of the 8 bits indicate (0, 1, 1, 1), that is, precoding information of a $1^{st}$ antenna port group in the four antenna port groups is 0, and every two of the last 6 bits in the 8 bits indicate a value of one of the three third indexes, to indicate precoding information of a $2^{nd}$ antenna port group, a $3^{rd}$ antenna port group, and a $4^{th}$ antenna port group.

When P=2 or 0, the quantity of uplink transmission layers corresponding to the first uplink precoding matrix is 2, and the first column quantity allocation information indicates one of (1, 1, 0, 0), (1, 0, 1, 0), (1, 0, 0, 1), (0, 1, 1, 0), (0, 1, 0, 1), (0, 0, 1, 1), (2, 0, 0, 0), (0, 2, 0, 0), (0, 0, 2, 0), and (0, 0, 0, 2); or the quantity of uplink transmission layers corresponding to the first uplink precoding matrix is 4, and the first column quantity allocation information indicates one of (2, 2, 0, 0), (2, 0, 2, 0), (2, 0, 0, 2), (0, 2, 2, 0), (0, 2, 0, 2), and (0, 0, 2, 2). There are a total of 16 possible values of the first column quantity allocation information enumerated above. Therefore, in the first information, the network device may use first four of the 8 bits to indicate one of the 16 values. In this case, a value of M is 1 or 2, and any one of the M predefined codewords is a rank-1 2Tx fully coherent codeword or a rank-2 2Tx fully coherent codeword. Because there are four "rank-1 2Tx fully coherent codewords" in Table 1 and two "rank-2 2Tx fully coherent codewords" in Table 2, the network device may use four of the 8 bits to indicate the M predefined codewords. For example, in correspondence to (0, 1, 0, 1), M is 2. The network device may use 2 bits to indicate a 1st "rank-1 2Tx fully coherent codeword", and use 2 bits to indicate a 2nd "rank-1 2Tx fully coherent codeword". For another example, in correspondence to (2, 0, 0, 0), M is 1. The network device may use 2 bits to indicate one "rank-2 2Tx fully coherent codeword", and remaining 2 bits are reserved bits.

When P=1, the quantity of transmission layers corresponding to the first uplink precoding matrix is 1, and the first column quantity allocation information indicates one of (1, 0, 0, 0), (0, 1, 0, 0), (0, 0, 1, 0), and (0, 0, 0, 1); or the quantity of transmission layers corresponding to the first uplink precoding matrix may be 3, and the first column quantity allocation information indicates one of (2, 1, 0, 0), (2, 0, 1, 0), (2, 0, 0, 1), (0, 2, 1, 0), (0, 2, 0, 1), and (0, 0, 2, 1). There are a total of 10 possible values of the first column quantity allocation information enumerated above. Therefore, in the first information, the network device may use first four of the 8 bits to indicate one of the 10 values. In this case, a value of M may be 1 or 2, and any one of the M predefined codewords is a rank-1 2Tx fully coherent codeword or a rank-2 2Tx fully coherent codeword. Because there are four "rank-1 2Tx fully coherent codewords" in Table 1 and two "rank-2 2Tx fully coherent codewords" in Table 2, the network device may use last four of the 8 bits to indicate the M predefined codewords. For example, in correspondence to (2, 1, 0, 0), M is 2. The network device may use 2 bits to indicate one "rank-2 2Tx fully coherent codeword", and use 2 bits to indicate one "rank-1 2Tx fully coherent codeword". For another example, in correspondence to (0, 1, 0, 0), M is 1. The network device may use 2 bits to indicate one "rank-1 2Tx fully coherent codeword", and remaining 2 bits are reserved bits.

Further, to meet full power transmission of fullpowerMode1, an 8Tx precoding matrix supporting full power transmission is added based on the foregoing solution for a scenario in which the quantity of uplink transmission layers used by the terminal device to send the uplink data is 1, 2, or 3. In the following, the quantity 1 of uplink transmission layers is referred to as a rank 1 for short, the quantity 2 of uplink transmission layers is referred to as a rank 2 for short, and the quantity 3 of uplink transmission layers is referred to as a rank 3 for short.

The following rule needs to be met when a fully coherent 8Tx precoding matrix is added for the rank 1: Precoding information corresponding to the four antenna port groups of the terminal device is the same. For some examples of adding the fully coherent 8Tx precoding matrix for the rank 1, refer to the following Table 12.

Table 12

| Number | One-layer fully coherent 8Tx precoding matrix | | | |
|---|---|---|---|---|
| 0 to 3 | $\dfrac{1}{2\sqrt{2}}\begin{bmatrix}1\\1\\1\\1\\1\\1\\1\\1\end{bmatrix}$ | $\dfrac{1}{2\sqrt{2}}\begin{bmatrix}1\\1\\1\\1\\j\\j\\j\\j\end{bmatrix}$ | $\dfrac{1}{2\sqrt{2}}\begin{bmatrix}1\\1\\1\\1\\-1\\-1\\-1\\-1\end{bmatrix}$ | $\dfrac{1}{2\sqrt{2}}\begin{bmatrix}1\\1\\1\\1\\-j\\-j\\-j\\-j\end{bmatrix}$ |

Optionally, during actual definition, only a part or all of the 8Tx precoding matrices in Table 12 may be configured. For example, only the 8Tx codeword numbered 0 in Table 12 is configured, or the 8Tx precoding matrices numbered 0 to 3 in Table 12 are configured.

For the rank 2 and the rank 3, a fully coherent 8Tx precoding matrix may be added, or a partially-coherent-1 8Tx precoding matrix may be added, to support full power transmission. For some examples of adding a fully coherent or partially-coherent-1 8Tx precoding matrix for the rank 2 and the rank 3, refer to the following Table 13.

Table 13

| Quantity of uplink transmission layers | Fully coherent | Partially coherent 1 (a) | Partially coherent 1 (b) |
|---|---|---|---|
| Rank 2 | $\dfrac{1}{4}\begin{bmatrix}1 & 1\\1 & 1\\1 & 1\\1 & 1\\1 & -1\\1 & -1\\1 & -1\\1 & -1\end{bmatrix}$ | $\dfrac{1}{2\sqrt{2}}\begin{bmatrix}1 & 0\\1 & 0\\0 & 1\\0 & 1\\1 & 0\\1 & 0\\0 & 1\\0 & 1\end{bmatrix}$ | $\dfrac{1}{2\sqrt{2}}\begin{bmatrix}1 & 0\\1 & 0\\0 & 1\\0 & 1\\1 & 0\\1 & 0\\0 & 1\\0 & 1\end{bmatrix}$ |
| Rank 3 | $\dfrac{1}{2\sqrt{6}}\begin{bmatrix}1 & 1 & 1\\1 & j & 1\\1 & -1 & 1\\1 & -j & 1\\1 & 1 & -1\\1 & j & -1\\1 & -1 & -1\\1 & -j & -1\end{bmatrix}$ | $\dfrac{1}{2\sqrt{3}}\begin{bmatrix}1 & 0 & 0\\1 & 0 & 0\\0 & 1 & 1\\0 & 1 & 1\\1 & 0 & 0\\1 & 0 & 0\\0 & 1 & -1\\0 & 1 & -1\end{bmatrix}$ | $\dfrac{1}{2\sqrt{3}}\begin{bmatrix}1 & 0 & 0\\1 & 0 & 0\\0 & 1 & 0\\0 & 0 & 1\\1 & 0 & 0\\1 & 0 & 0\\0 & 1 & 0\\0 & 0 & 1\end{bmatrix}$ |

It may be understood that, an 8Tx precoding matrix that supports full power transmission and that is added for the rank 2 meets the following rule: A 1st column and a 2nd column of the 8Tx precoding matrix respectively use a rank-1 4Tx fully coherent codeword and a rank-1 4Tx all-zero vector. Ports corresponding to non-zero elements in the 1st column belong to one antenna port group, for example, {0, 1, 4, 5}, and ports corresponding to non-zero elements in the 2nd column belong to another antenna port group, for example, {2, 3, 6, 7}. An 8Tx precoding matrix that supports full power transmission and that is added for the rank 3 meets the following rule: A 1st column of the 8Tx precoding matrix uses a rank-1 4Tx fully coherent codeword and a rank-1 4Tx all-zero vector; and a 2nd column and a 3rd column of the 8Tx precoding matrix use a rank-2 4Tx fully coherent codeword or a rank-2 4Tx partially coherent codeword and a rank-2 4Tx all-zero vector. Ports corresponding to non-zero elements in the 1st column belong to one antenna port group, for example, {0, 1, 4, 5}, and ports corresponding to non-zero elements in the 2nd and 3rd columns belong to another antenna port group, for example, {2, 3, 6, 7}. Alternatively, ports corresponding to non-zero elements in the 2nd column are a part of antenna ports in another antenna port group, for example, {2, 6}, and ports corresponding to non-zero elements in the 3rd column are a remaining part of antenna ports in the another antenna port group, for example, {3, 7}. A location of a zero element in the added 8Tx precoding matrix is not limited in this embodiment of this application.

Optionally, during actual definition, a part or all of the 8Tx precoding matrices in Table 13 may be configured. For example, only one 8Tx precoding matrix corresponding to the rank 2 and one 8Tx precoding matrix corresponding to the rank 3 in Table 13 are configured; or the three 8Tx precoding matrices corresponding to the rank 2 and the three 8Tx precoding matrices corresponding to the rank 3 in Table 13 are configured.

In this embodiment of this application, with reference to Table 12 and Table 13, the following uses an example in which one 8Tx precoding matrix corresponding to the rank 1, one 8Tx precoding matrix corresponding to the rank 2, and one 8Tx precoding matrix corresponding to the rank 3 are configured to describe in detail content included in the first information.

In a possible implementation, a manner of indicating the three 8Tx precoding matrices may be introduced based on the bit usage manner in the foregoing "P=1". Specifically, the network device may use the first four of the 8 bits in the first information to indicate the first column quantity allocation information and the three 8Tx precoding matrices. A value range of the first four of the 8 bits is 0 to 12. There are 10 possible values of the first column quantity allocation information, and numbers are 0 to 9. The three 8Tx precoding matrices respectively correspond to the numbers 10, 11, and 12. It may be understood that, when values of the first four of the 8 bits are 10, 11, or 12, the last four of the 8 bits are reserved bits.

In another possible implementation, the network device may indicate one of the three 8Tx precoding matrices by using column quantity allocation information that does not exist (is invalid) in Table 11. For example, the first information includes an index 1, an index 2, an index 3, and an index 4. Each index indicates a quantity of columns corresponding to one predefined codeword, and the predefined codeword may be one of 2Tx fully coherent codewords. When a column quantity combination corresponding to four predefined codewords indicated by the index 1, the index 2, the index 3, and the index 4 is column quantity allocation information that does not exist in Table 11, the index 1, the index 2, the index 3, and the index 4 jointly indicate one 8Tx precoding matrix supporting full power transmission. Optionally, the column quantity combination corresponding to the four predefined codewords indicated by the index 1, the index 2, the index 3, and the index 4 may be understood as the first column quantity allocation information. For example, the network device includes only the first column quantity allocation information in the first information. The first column quantity allocation information indicates (2, 1, 1, 0) that does not exist in Table 11, to indicate one rank-1 8Tx precoding matrix. Alternatively, the first column quantity allocation information indicates (2, 1, 0, 1) that does not exist in Table 11, to indicate one rank-2 8Tx precoding matrix. Alternatively, the first column quantity allocation information indicates (1, 2, 0, 1) that does not exist in Table 11, to indicate one rank-3 8Tx precoding matrix.

The manner 51 is applied to an 8Tx precoding scenario. The network device may indicate the M predefined codewords by using a maximum of 10 bits, to reduce indication overheads.

Manner 52: The network device and the terminal device may pre-agree on determining, according to a rule in the following Table 14, an indication manner of the M predefined codewords used to generate the first uplink precoding matrix.

Table 14

| Quantity of codewords | Precoding matrix corresponding to the quantity of uplink transmission layers |
|---|---|
| 1 | 1 layer: TPMI=X |
| 1 | 2 layers: TPMI=X |
| 1 | 3 layers: TPMI=X |
| 256 | 4 layers: (1, 1, 1, 1) |
| 128 | 5 layers: (1, 1, 2, 1) |
| 64 | 6 layers: (2, 1, 2, 1) |
| 32 | 7 layers: (2, 1, 2, 2) |
| 16 | 8 layers: (2, 2, 2, 2) |

"1 layer: TPMI=X" means a fully coherent 8Tx precoding matrix separately added for the rank 1, for example, the 8Tx codeword numbered 0 in Table 12. "2 layers: TPMI=X" means a partially-coherent-1 or fully coherent 8Tx precoding matrix separately added for the rank 2, for example, any 8Tx codeword corresponding to the rank 2 in Table 13. "3 layers: TPMI=X" means a partially-coherent-1 or fully coherent 8Tx precoding matrix separately added for the rank 3, for example, any 8Tx codeword corresponding to the rank 3 in Table 13. The transmit antenna ports of the terminal device are grouped into four antenna port groups. A $4^{th}$ layer to an $8^{th}$ layer in Table 14 show a quantity of columns corresponding to each of the four antenna port groups in the first uplink precoding matrix, that is, a rank corresponding to each antenna port group.

In the manner 52, there are the following two cases based on the quantity of uplink transmission layers corresponding to the first uplink precoding matrix. Different cases correspond to different content of the first information.

Case 1: The quantity of uplink transmission layers corresponding to the first uplink precoding matrix is less than or equal to 4. The first indication information in the first information occupies 1 bit, to indicate whether the quantity of uplink transmission layers corresponding to the first uplink precoding matrix is 4. If the quantity of uplink transmission layers corresponding to the first uplink precoding matrix is 4, the first information includes four third indexes, and each index occupies 2 bits. If the quantity of uplink transmission layers corresponding to the first uplink precoding matrix is not 4, the second indication information and the M third indexes in the first information may be determined based on a solution of separately adding an 8Tx precoding matrix for the rank 1/rank 2/rank 3.

Case 2: The quantity of uplink transmission layers corresponding to the first uplink precoding matrix is greater than 4. The second indication information in the first information occupies 2 bits, to indicate a quantity ($P \leq 4$) of antenna port groups whose corresponding quantities of columns are 1 in the four antenna port groups, and the index information of the M predefined codewords occupies 7 bits. For example, that P is 3 corresponds to "5 layers: (1, 1, 2, 1)" in Table 14. Because there are four rank-1 fully coherent 2Tx codewords and two rank-2 fully coherent 2Tx codewords, the index information of the M predefined codewords in the first information includes only four third indexes, and occupies a total of 2+2+1+2=7 bits. Similarly, that P is 2 corresponds to "6 layers: (2, 1, 2, 1)" in Table 14. The index information of the M predefined codewords in the first information includes only four third indexes, and occupies a total of 1+2+1+2=6 bits, and a remaining 1 bit is a reserved bit. That P is 1 corresponds to "7 layers: (2, 1, 2, 2)" in Table 14. The index information of the M predefined codewords in the first information includes only four third indexes, and occupies a total of 1+2+1+1=5 bits, and remaining 2 bits are reserved bits. That P is 0 corresponds to "8 layers: (2, 2, 2, 2)" in Table 14. The index information of the M predefined codewords in the first information includes only four third indexes, and occupies a total of 1+1+1+1=4 bits, and remaining 3 bits are reserved bits.

The manner 52 is applied to a precoding scenario. The network device may indicate the M predefined codewords by using a maximum of 9 bits, to generate a larger precoding matrix, so as to reduce indication overheads.

S502: The terminal device determines the first uplink precoding matrix based on the first information.

It can be learned from the descriptions in S501 that the first information includes the first indication information, the second indication information, and values of the M third indexes, to indicate the M predefined codewords. The terminal device may determine the M predefined codewords by querying Table 3 to Table 7 based on the first information, and then determine the first uplink precoding matrix based on the M predefined codewords in a manner the same as that on a network device side.

For example, the quantity of transmit antenna ports of the terminal device is 8, and the transmit antenna ports are grouped into four antenna port groups. The first uplink precoding matrix W may be understood with reference to the following structure (4):

$$W = \begin{bmatrix} P_{10} & 0 & 0 & 0 \\ 0 & P_{20} & 0 & 0 \\ 0 & 0 & P_{30} & 0 \\ 0 & 0 & 0 & P_{40} \\ P_{11} & 0 & 0 & 0 \\ 0 & P_{21} & 0 & 0 \\ 0 & 0 & P_{31} & 0 \\ 0 & 0 & 0 & P_{41} \end{bmatrix} \quad (4)$$

$\{P_{10}, P_{11}\}$ is precoding information of a 1st antenna port group in the four antenna port groups, $\{P_{20}, P_{21}\}$ is precoding information of a 2nd antenna port group in the four antenna port groups, $\{P_{30}, P_{31}\}$ is precoding information of a 3rd antenna port group in the four antenna port groups, and $\{P_{40}, P_{41}\}$ is precoding information of a 4th antenna port group in the four antenna port groups.

It may be understood from the descriptions in S501 that in a possible design, if the first information carries four third indexes to respectively indicate four rank-1 2Tx fully coherent codewords, the terminal device may respectively determine $\{P_{10}, P_{11}\}$, $\{P_{20}, P_{21}\}$, $\{P_{30}, P_{31}\}$, and $\{P_{40}, P_{41}\}$ based on the four rank-1 2Tx fully coherent codewords. For example, $P_{10}$ is a 1st row of a 1st codeword in the four codewords, $P_{11}$ is a 2nd row of the 1st codeword in the four codewords, and so on. Details are not described herein again.

In another possible design, if a quantity of third indexes carried in the first information is less than 4, precoding information of at least one of the four port groups is 0. In this case, the structure (4) of the first uplink precoding matrix W may be transformed with reference to the descriptions in S302. For example, in the manner 51, the first column quantity allocation information corresponding to the first uplink precoding matrix indicates (2, 2, 0, 0), and the structure of the first uplink precoding matrix W may be understood with reference to the following structure (5):

$$W = \begin{bmatrix} P_{10} & 0 \\ 0 & P_{20} \\ 0 & 0 \\ 0 & 0 \\ P_{11} & 0 \\ 0 & P_{21} \\ 0 & 0 \\ 0 & 0 \end{bmatrix} \quad (5)$$

In correspondence to (2, 2, 0, 0), the first information received by the terminal device includes two third indexes, where a rank-2 2Tx fully coherent codeword indicated by a 1st third index is used to determine the precoding information $\{P_{10}, P_{11}\}$ of the 1st antenna port group in the four antenna port groups, and a rank-2 2Tx fully coherent codeword indicated by a 2nd third index is used to determine the precoding information $\{P_{20}, P_{21}\}$ of the 2nd antenna port group in the four antenna port groups.

S503: The terminal device sends the uplink data to the access network device based on the first uplink precoding matrix.

The terminal device may precode the uplink data based on the first uplink precoding matrix, and then send precoded uplink data to the access network device.

In the foregoing method provided in this embodiment of this application, based on a fully coherent 2Tx codeword, an uplink precoding matrix that is adapted to a larger quantity (for example, 8) of uplink transmit antenna ports is flexibly generated, and meets a requirement of full power transmission of fullpowerMode1. This helps improve uplink transmission efficiency and performance.

In addition, for a non-coherent 8Tx terminal, that is, a coherence capability of the terminal device can support eight transmit antenna ports in performing sending only in a non-coherent manner, in this embodiment of this application, four 8Tx precoding matrices in the following Table 15-1 are designed, so that the non-coherent 8Tx terminal performs full power transmission of fullpowerMode1 by using any one of the following four 8Tx precoding matrices.

Table 15-1

| Number | 8Tx precoding matrix used by the non-coherent 8Tx terminal to support full power transmission of fullpowerMode1 | | | |
|---|---|---|---|---|
| Ranks 0 to 3 | $\dfrac{1}{2\sqrt{2}}\begin{bmatrix}1\\1\\1\\1\\1\\1\\1\\1\end{bmatrix}$ | $\dfrac{1}{2\sqrt{2}}\begin{bmatrix}1&0\\1&0\\0&1\\0&1\\1&0\\1&0\\0&j\\0&j\end{bmatrix}$ | $\dfrac{1}{2\sqrt{2}}\begin{bmatrix}1&0&0\\1&0&0\\0&1&0\\0&0&1\\1&0&0\\1&0&0\\0&1&0\\0&0&1\end{bmatrix}$ | $\dfrac{1}{2\sqrt{2}}\begin{bmatrix}1&0&0&0\\0&1&0&0\\0&0&1&0\\0&0&0&1\\1&0&0&0\\0&1&0&0\\0&0&1&0\\0&0&0&1\end{bmatrix}$ |
| Ranks 4 to 7 | $\dfrac{1}{\sqrt{10}}\begin{bmatrix}1&0&0&0&0\\0&1&0&0&0\\0&0&1&1&0\\0&0&0&0&1\\1&0&0&0&0\\0&1&0&0&0\\0&0&1&-1&0\\0&0&0&0&1\end{bmatrix}$ | $\dfrac{1}{2\sqrt{3}}\begin{bmatrix}1&1&0&0&0&0\\0&0&1&0&0&0\\0&0&0&1&1&0\\0&0&0&0&0&1\\1&-1&0&0&0&0\\0&0&1&0&0&0\\0&0&0&1&-1&0\\0&0&0&0&0&1\end{bmatrix}$ | $\dfrac{1}{2\sqrt{3}}\begin{bmatrix}1&1&0&0&0&0&0\\0&0&1&0&0&0&0\\0&0&0&1&1&0&0\\0&0&0&0&0&1&1\\1&-1&0&0&0&0&0\\0&0&1&0&0&0&0\\0&0&0&1&-1&0&0\\0&0&0&0&0&1&-1\end{bmatrix}$ | $\dfrac{1}{2\sqrt{3}}\begin{bmatrix}1&0&0&0&0&0&0&0\\0&1&0&0&0&0&0&0\\0&0&1&0&0&0&0&0\\0&0&0&1&0&0&0&0\\0&0&0&0&1&0&0&0\\0&0&0&0&0&1&0&0\\0&0&0&0&0&0&1&0\\0&0&0&0&0&0&0&1\end{bmatrix}$ |

It may be understood that, in Table 15-1, a non-coherent 8Tx precoding matrix corresponding to the rank 4 is one of 256 precoding matrices in a partially-coherent-2 stream quantity allocation combination (1, 1, 1, 1), a non-coherent 8Tx precoding matrix corresponding to the rank 5 is one of 256 precoding matrices in a stream quantity allocation combination (1, 1, 2, 1), a non-coherent 8Tx precoding matrix corresponding to the rank 6 is one of 64 precoding matrices in a partially-coherent-2 stream quantity allocation combination (2, 1, 2, 1), and a non-coherent 8Tx precoding matrix corresponding to the rank 7 is one of 32 precoding matrices in a partially-coherent-2 stream quantity allocation combination (2, 1, 2, 2).

Alternatively, for ranks 5 to 8, the following rule is used to generate an 8Tx precoding matrix that supports full power transmission of fullpowerMode1. For the rank 5, non-zero ports in each of three columns belong to one antenna port group. For example, non-zero ports in a 1st column belong to {0, 4}, non-zero ports in a 2nd column belong to {1, 5}, and non-zero ports in a 3rd column belong to {2, 6}. A non-zero port in each of other two columns is one port in remaining one antenna port group and the ports are different from each other. For example, a non-zero port in a 4th column is a port 3, and a non-zero port in a 5th column is a port 7. For the rank 6, non-zero ports in each of two columns belong to one antenna port group. For example, non-zero ports in a 1st column belong to {0, 4}, and non-zero ports in a 2nd column belong to {1, 5}. A non-zero port in each of other four columns is one port in remaining two antenna port groups and the ports are different from each other. For example, a non-zero port in a 3rd column is a port 2, a non-zero port in a 4th column is a port 3, a non-zero port in a 5th column is a port 6, and a non-zero port in a 6th column is a port 7. For the rank 7, non-zero ports in one column belong to one antenna port group. For example, non-zero ports in a 1st column belong to {0, 4}. A non-zero port in each of other six columns is one port in remaining three antenna port groups and the ports are different from each other. For example, a non-zero port in a 2nd column is a port 1, a non-zero port in a 3rd column is a port 2, a non-zero port in a 4th column is a port 3, a non-zero port in a 5th column is a port 5, a non-zero port in a 6th column is a port 6, and a non-zero port in a 7th column is a port 7. For the rank 8, a non-zero port in each column is one of the eight antenna ports, and the ports are different from each other. For example, non-zero ports in a 1st column to an 8th column are 0, 1, 2, 3, 4, 5, 6, and 7 respectively. Details are shown in the following Table 15-2.

Table 15-2

| Number | 8Tx precoding matrix used by the non-coherent 8Tx terminal to support full power transmission of fullpowerMode1 | | | |
|---|---|---|---|---|
| Ranks 0 to 3 | $\frac{1}{2\sqrt{2}}\begin{bmatrix}1\\1\\1\\1\\1\\1\\1\\1\end{bmatrix}$ | $\frac{1}{2\sqrt{2}}\begin{bmatrix}10\\10\\01\\01\\10\\10\\01\\01\end{bmatrix}$ | $\frac{1}{2\sqrt{2}}\begin{bmatrix}100\\100\\010\\001\\100\\100\\010\\001\end{bmatrix}$ | $\frac{1}{2\sqrt{2}}\begin{bmatrix}1000\\0100\\0010\\0001\\1000\\0100\\0010\\0001\end{bmatrix}$ |
| Ranks 4 to 7 | $\frac{1}{2\sqrt{2}}\begin{bmatrix}10000\\01000\\00100\\00010\\10000\\01000\\00100\\00001\end{bmatrix}$ | $\frac{1}{2\sqrt{2}}\begin{bmatrix}100000\\010000\\001000\\000100\\100000\\010000\\000010\\000001\end{bmatrix}$ | $\frac{1}{2\sqrt{3}}\begin{bmatrix}1000000\\0100000\\0010000\\0001000\\1000000\\0000100\\0000010\\0000001\end{bmatrix}$ | $\frac{1}{2\sqrt{3}}\begin{bmatrix}10000000\\01000000\\00100000\\00010000\\00001000\\00000100\\00000010\\00000001\end{bmatrix}$ |

The eight 8Tx precoding matrices in Table 15-1 and Table 15-2 may be numbered 0 to 7 in ascending order of ranks. Based on this, in a full power transmission scenario of fullpowerMode1, the network device may include a number of one of the 8Tx precoding matrices in the first information, to indicate the corresponding 8Tx precoding matrix. It may be understood that, in the first information, 3 bits may be used to indicate any one of the numbers 0 to 7.

Refer to FIG. 6. An embodiment of this application provides an uplink precoding indication method that may be used to implement a solution of full power transmission of fullpowerMode2. The method mainly includes the following procedure.

S601: A terminal device sends second information to a network device, where the second information indicates that K transmit antenna ports of the terminal device support full power transmission, and K is a positive integer.

When K is 1, it indicates that one transmit antenna port of the terminal device supports full power transmission, or it may be described as that a power amplifier (power amplifier, PA) corresponding to the one transmit antenna port supports full power transmission. When K is greater than 1, it indicates that the K transmit antenna ports of the terminal device support full power transmission, or it may be described as that K power amplifiers (power amplifiers, PAs) corresponding to the K transmit antenna ports are superimposed to support full power transmission. Optionally, when K is greater than 1, polarizations of at least two of the K transmit antenna ports are different.

That a quantity of transmit antenna ports of the terminal device shown in FIG. 4 is 8 is used as an example. The K transmit antenna ports that support full power transmission in the eight transmit antenna ports may be understood with reference to the following manners 61 to 64.

Manner 61: K is 1, and one of the eight transmit antenna ports supports full power transmission. For example, the eight transmit antenna ports are numbered 0 to 7, and the transmit antenna port 0 supports full power transmission.

Manner 62: K is 2, two of the eight transmit antenna ports support full power transmission, and the two transmit antenna ports are deployed at a same location but have different polarization directions. For example, the eight transmit antenna ports are numbered 0 to 7, the transmit antenna ports {0, 4} support full power transmission, and a PA corresponding to the transmit antenna port 0 and a PA corresponding to the transmit antenna port 4 are superimposed to support full power transmission. Refer to (a) or (b) in FIG. 4, the two transmit antenna ports {0, 4} are deployed at a same location but have different polarization directions.

Manner 63: K is 4, and four of the eight transmit antenna ports support full power transmission. Optionally, every two of the four transmit antenna ports are deployed at a same location but have different polarization directions. For example, the eight transmit antenna ports are numbered 0 to 7, and the transmit antenna ports {0, 4} and {1, 5} support full power transmission, that is, a PA corresponding to the transmit antenna port 0, a PA corresponding to the transmit antenna port 1, a PA corresponding to the transmit antenna port 4, and a PA corresponding to the transmit antenna port 5 are superimposed to support full power transmission. Refer to (a) or (b) in FIG. 4, the transmit antenna ports {0, 4} are deployed at a same location but have different polarization directions; and the transmit antenna ports {1, 5} are deployed at a same location but have different polarization directions.

Manner 64: K is 6, and six of the eight transmit antenna ports support full power transmission. Optionally, every two of the four transmit antenna ports are deployed at a same location but have different polarization directions. For example, the eight transmit antenna ports are numbered 0 to 7, and the transmit antenna ports {0, 4}, {1, 5}, and {2, 6} support full power transmission, that is, a PA corresponding to the transmit antenna port 0, a PA corresponding to the transmit antenna port 1, a PA corresponding to the transmit antenna port 2, a PA corresponding to the transmit antenna port 4, a PA corresponding to the transmit antenna port 5, and a PA corresponding to the transmit antenna port 6 are superimposed to support full power transmission. Refer to (a) or (b) in FIG. 4, the transmit antenna ports {0, 4} are deployed at a same location but have different polarization directions; the transmit antenna ports {1, 5} are deployed at a same location but have different polarization directions; and the transmit antenna ports {2, 6} are deployed at a same location but have different polarization directions.

Based on this, in a possible manner, the second information includes identification information of one of the manners 61 to 64. For example, if the second information sent by the terminal device to the network device includes identification information of the manner 62, the network device may determine that two of the eight transmit antenna ports of the terminal device support full power transmission, and the two transmit antenna ports are {0, 4}. For another example, if the second information sent by the terminal device to the network device includes identification information of the manner 63, the network device may determine that four of the eight transmit antenna ports of the terminal device support full power transmission, and the four transmit antenna ports include {0, 4} and {1, 5}.

In a possible implementation, for different coherence capabilities of the terminal device, precoding matrices used in the manner 61, the manner 62, the manner 63, and the manner 64 may be predefined. Different coherence capabilities of the terminal device correspond to different precoding matrices. For example, the following uses an example in which the quantity of transmit antenna ports of the terminal device is 8 to describe precoding matrices that may be used by the terminal device with different coherence capabilities.

Example 1: For a non-coherent 8Tx terminal, the precoding matrix used in the manner 61 may be a precoding matrix indicated by GO; for the precoding matrix used in the manner 62, refer to a precoding matrix indicated by G1; for the precoding matrix used in the manner 63, refer to a precoding matrix indicated by G2; and for the precoding matrix used in the manner 64, refer to a precoding matrix indicated by G3.

$$G0:\ \frac{1}{2}\begin{bmatrix}1\\0\\0\\0\\0\\0\\0\\0\end{bmatrix}\qquad G1:\ \frac{1}{2}\begin{bmatrix}1&0\\0&0\\0&0\\0&0\\0&1\\0&0\\0&0\\0&0\end{bmatrix}\qquad G2:\ \frac{1}{2}\begin{bmatrix}1&0&0&0\\0&1&0&0\\0&0&0&0\\0&0&0&0\\0&0&1&0\\0&0&0&1\\0&0&0&0\\0&0&0&0\end{bmatrix}\qquad G3:\ \frac{1}{\sqrt{6}}\begin{bmatrix}1&0&0&0&0&0\\0&1&0&0&0&0\\0&0&1&0&0&0\\0&0&0&1&0&0\\0&0&0&0&1&0\\0&0&0&0&0&1\\0&0&0&0&0&0\\0&0&0&0&0&0\end{bmatrix}$$

Example 2: For a partially-coherent-2 8Tx terminal, the precoding matrix used in the manner 62 may be one precoding matrix in a precoding matrix set indicated by G4 shown in the following Table 16; the precoding matrix used in the manner 63 may be one precoding matrix in a precoding matrix set indicated by G5 shown in the following Table 17; and the precoding matrix used in the manner 64 may be one precoding matrix in a precoding matrix set indicated by G6 shown in the following Table 18.

Table 16

| Number | G4 (PAs corresponding to two antenna ports) | | | |
|---|---|---|---|---|
| 0 to 3 | $\frac{1}{2}\begin{bmatrix}1\\0\\0\\0\\1\\0\\0\\0\end{bmatrix}$ | $\frac{1}{2}\begin{bmatrix}1\\0\\0\\0\\-1\\0\\0\\0\end{bmatrix}$ | $\frac{1}{2}\begin{bmatrix}1\\0\\0\\0\\j\\0\\0\\0\end{bmatrix}$ | $\frac{1}{2}\begin{bmatrix}1\\0\\0\\0\\-j\\0\\0\\0\end{bmatrix}$ |
| 4 and 5 | $\frac{1}{2}\begin{bmatrix}1&1\\0&0\\0&0\\0&0\\1&-1\\0&0\\0&0\\0&0\end{bmatrix}$ | $\frac{1}{2}\begin{bmatrix}1&1\\0&0\\0&0\\0&0\\j&-j\\0&0\\0&0\\0&0\end{bmatrix}$ | | |

Table 17

| Number | G5 (PAs corresponding to four antenna ports) | | | |
|---|---|---|---|---|
| 0 to 3 | $\frac{1}{2}\begin{bmatrix}1&0\\0&1\\0&0\\0&0\\1&0\\0&1\\0&0\\0&0\end{bmatrix}$ | $\frac{1}{2}\begin{bmatrix}1&0\\0&1\\0&0\\0&0\\1&0\\0&-1\\0&0\\0&0\end{bmatrix}$ | $\frac{1}{2}\begin{bmatrix}1&0\\0&1\\0&0\\0&0\\1&0\\0&j\\0&0\\0&0\end{bmatrix}$ | $\frac{1}{2}\begin{bmatrix}1&0\\0&1\\0&0\\0&0\\1&0\\0&-j\\0&0\\0&0\end{bmatrix}$ |

(continued)

| Number | G5 (PAs corresponding to four antenna ports) | | | |
|---|---|---|---|---|
| 4 to 7 | $\frac{1}{2}\begin{bmatrix} 1 & 0 \\ 0 & 1 \\ 0 & 0 \\ 0 & 0 \\ -1 & 0 \\ 0 & 1 \\ 0 & 0 \\ 0 & 0 \end{bmatrix}$ | $\frac{1}{2}\begin{bmatrix} 1 & 0 \\ 0 & 1 \\ 0 & 0 \\ 0 & 0 \\ -1 & 0 \\ 0 & -1 \\ 0 & 0 \\ 0 & 0 \end{bmatrix}$ | $\frac{1}{2}\begin{bmatrix} 1 & 0 \\ 0 & 1 \\ 0 & 0 \\ 0 & 0 \\ -1 & 0 \\ 0 & j \\ 0 & 0 \\ 0 & 0 \end{bmatrix}$ | $\frac{1}{2}\begin{bmatrix} 1 & 0 \\ 0 & 1 \\ 0 & 0 \\ 0 & 0 \\ -1 & 0 \\ 0 & -j \\ 0 & 0 \\ 0 & 0 \end{bmatrix}$ |
| 8 to 11 | $\frac{1}{2}\begin{bmatrix} 1 & 0 \\ 0 & 1 \\ 0 & 0 \\ 0 & 0 \\ j & 0 \\ 0 & 1 \\ 0 & 0 \\ 0 & 0 \end{bmatrix}$ | $\frac{1}{2}\begin{bmatrix} 1 & 0 \\ 0 & 1 \\ 0 & 0 \\ 0 & 0 \\ j & 0 \\ 0 & -1 \\ 0 & 0 \\ 0 & 0 \end{bmatrix}$ | $\frac{1}{2}\begin{bmatrix} 1 & 0 \\ 0 & 1 \\ 0 & 0 \\ 0 & 0 \\ j & 0 \\ 0 & j \\ 0 & 0 \\ 0 & 0 \end{bmatrix}$ | $\frac{1}{2}\begin{bmatrix} 1 & 0 \\ 0 & 1 \\ 0 & 0 \\ 0 & 0 \\ j & 0 \\ 0 & -j \\ 0 & 0 \\ 0 & 0 \end{bmatrix}$ |
| 12 to 15 | $\frac{1}{2}\begin{bmatrix} 1 & 0 \\ 0 & 1 \\ 0 & 0 \\ 0 & 0 \\ -j & 0 \\ 0 & 1 \\ 0 & 0 \\ 0 & 0 \end{bmatrix}$ | $\frac{1}{2}\begin{bmatrix} 1 & 0 \\ 0 & 1 \\ 0 & 0 \\ 0 & 0 \\ -j & 0 \\ 0 & -1 \\ 0 & 0 \\ 0 & 0 \end{bmatrix}$ | $\frac{1}{2}\begin{bmatrix} 1 & 0 \\ 0 & 1 \\ 0 & 0 \\ 0 & 0 \\ -j & 0 \\ 0 & j \\ 0 & 0 \\ 0 & 0 \end{bmatrix}$ | $\frac{1}{2}\begin{bmatrix} 1 & 0 \\ 0 & 1 \\ 0 & 0 \\ 0 & 0 \\ -j & 0 \\ 0 & -j \\ 0 & 0 \\ 0 & 0 \end{bmatrix}$ |
| 16 to 19 | $\frac{1}{\sqrt{6}}\begin{bmatrix} 1 & 1 & 0 \\ 0 & 0 & 1 \\ 0 & 0 & 0 \\ 0 & 0 & 0 \\ 1 & -1 & 0 \\ 0 & 0 & 1 \\ 0 & 0 & 0 \\ 0 & 0 & 0 \end{bmatrix}$ | $\frac{1}{\sqrt{6}}\begin{bmatrix} 1 & 1 & 0 \\ 0 & 0 & 1 \\ 0 & 0 & 0 \\ 0 & 0 & 0 \\ 1 & -1 & 0 \\ 0 & 0 & -1 \\ 0 & 0 & 0 \\ 0 & 0 & 0 \end{bmatrix}$ | $\frac{1}{\sqrt{6}}\begin{bmatrix} 1 & 1 & 0 \\ 0 & 0 & 1 \\ 0 & 0 & 0 \\ 0 & 0 & 0 \\ 1 & -1 & 0 \\ 0 & 0 & j \\ 0 & 0 & 0 \\ 0 & 0 & 0 \end{bmatrix}$ | $\frac{1}{\sqrt{6}}\begin{bmatrix} 1 & 1 & 0 \\ 0 & 0 & 1 \\ 0 & 0 & 0 \\ 0 & 0 & 0 \\ 1 & -1 & 0 \\ 0 & 0 & -j \\ 0 & 0 & 0 \\ 0 & 0 & 0 \end{bmatrix}$ |
| 20 to 23 | $\frac{1}{\sqrt{6}}\begin{bmatrix} 1 & 1 & 0 \\ 0 & 0 & 1 \\ 0 & 0 & 0 \\ 0 & 0 & 0 \\ j & -j & 0 \\ 0 & 0 & 1 \\ 0 & 0 & 0 \\ 0 & 0 & 0 \end{bmatrix}$ | $\frac{1}{\sqrt{6}}\begin{bmatrix} 1 & 1 & 0 \\ 0 & 0 & 1 \\ 0 & 0 & 0 \\ 0 & 0 & 0 \\ j & -j & 0 \\ 0 & 0 & -1 \\ 0 & 0 & 0 \\ 0 & 0 & 0 \end{bmatrix}$ | $\frac{1}{\sqrt{6}}\begin{bmatrix} 1 & 1 & 0 \\ 0 & 0 & 1 \\ 0 & 0 & 0 \\ 0 & 0 & 0 \\ j & -j & 0 \\ 0 & 0 & j \\ 0 & 0 & 0 \\ 0 & 0 & 0 \end{bmatrix}$ | $\frac{1}{\sqrt{6}}\begin{bmatrix} 1 & 1 & 0 \\ 0 & 0 & 1 \\ 0 & 0 & 0 \\ 0 & 0 & 0 \\ j & -j & 0 \\ 0 & 0 & -j \\ 0 & 0 & 0 \\ 0 & 0 & 0 \end{bmatrix}$ |

(continued)

| Number | G5 (PAs corresponding to four antenna ports) | | | |
|---|---|---|---|---|
| 24 to 27 | $\frac{1}{2\sqrt{2}}\begin{bmatrix}1&1&0&0\\0&0&1&1\\0&0&0&0\\0&0&0&0\\1&-1&0&0\\0&0&1&-1\\0&0&0&0\\0&0&0&0\end{bmatrix}$ | $\frac{1}{2\sqrt{2}}\begin{bmatrix}1&1&0&0\\0&0&1&1\\0&0&0&0\\0&0&0&0\\1&-1&0&0\\0&0&j&-j\\0&0&0&0\\0&0&0&0\end{bmatrix}$ | $\frac{1}{2\sqrt{2}}\begin{bmatrix}1&1&0&0\\0&0&1&1\\0&0&0&0\\0&0&0&0\\j&-j&0&0\\0&0&1&-1\\0&0&0&0\\0&0&0&0\end{bmatrix}$ | $\frac{1}{2\sqrt{2}}\begin{bmatrix}1&1&0&0\\0&0&1&1\\0&0&0&0\\0&0&0&0\\j&-j&0&0\\0&0&j&-j\\0&0&0&0\\0&0&0&0\end{bmatrix}$ |

Table 18

| Number | G6 (PAs corresponding to six antenna ports) | | |
|---|---|---|---|
| 0 to 87 | $\frac{1}{\sqrt{6}}\begin{bmatrix}A_1&0&0\\0&B_1&0\\0&0&C_1\\0&0&0\\A_2&0&0\\0&B_2&0\\0&0&C_2\\0&0&0\end{bmatrix}$ | $\frac{1}{\sqrt{10}}\begin{bmatrix}A_{11}&A_{12}&0&0&0\\0&0&B_{11}&B_{12}&0\\0&0&0&0&C_1\\0&0&0&0&0\\A_{21}&A_{22}&0&0&0\\0&0&B_{21}&B_{22}&0\\0&0&0&0&C_2\\0&0&0&0&0\end{bmatrix}$ | $\frac{1}{\sqrt{10}}\begin{bmatrix}A_{11}&A_{12}&0&0&0&0\\0&0&B_{11}&B_{12}&0&0\\0&0&0&0&C_{11}&C_{12}\\0&0&0&0&0&0\\A_{21}&A_{22}&0&0&0&0\\0&0&B_{21}&B_{22}&0&0\\0&0&0&0&C_{21}&C_{22}\\0&0&0&0&0&0\end{bmatrix}$ |

Precoding matrices indicated by the numbers 0 to 63 in Table 18 are determined based on three rank-1 2Tx fully coherent codewords. A 1st codeword in the three rank-1 2Tx fully coherent codewords is used to determine $\{A_1, A_2\}$. A 2nd codeword in the three rank-1 2Tx fully coherent codewords is used to determine $\{B_1, B_2\}$. A 3rd codeword in the three rank-1 2Tx fully coherent codewords is used to determine $\{C_1, C_2\}$. Precoding matrices indicated by the numbers 64 to 79 in Table 18 are determined based on two rank-2 2Tx fully coherent codewords and one rank-1 2Tx fully coherent codeword. A 1st rank-2 2Tx fully coherent codeword is used to determine $\{A_{11}, A_{12}, A_{21}, A_{22}\}$. A 2nd rank-2 2Tx fully coherent codeword is used to determine $\{B_{11}, B_{12}, B_{21}, B_{22}\}$. The last rank-1 2Tx fully coherent codeword is used to determine $\{C_1, C_2\}$. Precoding matrices indicated by the numbers 80 to 87 in Table 18 are determined based on three rank-2 2Tx fully coherent codewords. A 1st codeword in the three rank-1 2Tx fully coherent codewords is used to determine $\{A_{11}, A_{12}, A_{21}, A_{22}\}$. A 2nd codeword in the three rank-2 2Tx fully coherent codewords is used to determine $\{B_{11}, B_{12}, B_{21}, B_{22}\}$. A 3rd codeword in the three rank-2 2Tx fully coherent codewords is used to determine $\{C_{11}, C_{12}, C_{21}, C_{22}\}$.

Example 3: For a partially-coherent-1 8Tx terminal, the precoding matrix used in the manner 63 may be one precoding matrix in a group of precoding matrices indicated by G7 shown in the following Table 19.

Table 19

| Number | G7 (PAs corresponding to four antenna ports) | | | |
|---|---|---|---|---|
| 0 to 3 | $\frac{1}{2}\begin{bmatrix}1\\1\\0\\0\\1\\1\\0\\0\end{bmatrix}$ | $\frac{1}{2}\begin{bmatrix}1\\1\\0\\0\\j\\j\\0\\0\end{bmatrix}$ | $\frac{1}{2}\begin{bmatrix}1\\1\\0\\0\\-1\\-1\\0\\0\end{bmatrix}$ | $\frac{1}{2}\begin{bmatrix}1\\1\\0\\0\\-j\\-j\\0\\0\end{bmatrix}$ |

(continued)

| Number | G7 (PAs corresponding to four antenna ports) | | | |
|---|---|---|---|---|
| 4 to 7 | $\dfrac{1}{2}\begin{bmatrix}1\\j\\0\\0\\1\\j\\0\\0\end{bmatrix}$ | $\dfrac{1}{2}\begin{bmatrix}1\\j\\0\\0\\j\\-1\\0\\0\end{bmatrix}$ | $\dfrac{1}{2}\begin{bmatrix}1\\j\\0\\0\\-1\\-j\\0\\0\end{bmatrix}$ | $\dfrac{1}{2}\begin{bmatrix}1\\j\\0\\0\\-j\\1\\0\\0\end{bmatrix}$ |
| 8 to 11 | $\dfrac{1}{2}\begin{bmatrix}1\\-1\\0\\0\\1\\-1\\0\\0\end{bmatrix}$ | $\dfrac{1}{2}\begin{bmatrix}1\\-1\\0\\0\\j\\-j\\0\\0\end{bmatrix}$ | $\dfrac{1}{2}\begin{bmatrix}1\\-1\\0\\0\\-1\\-1\\0\\0\end{bmatrix}$ | $\dfrac{1}{2}\begin{bmatrix}1\\-1\\0\\0\\-j\\j\\0\\0\end{bmatrix}$ |
| 12 to 15 | $\dfrac{1}{2}\begin{bmatrix}1\\-j\\0\\0\\1\\-j\\0\\0\end{bmatrix}$ | $\dfrac{1}{2}\begin{bmatrix}1\\-j\\0\\0\\j\\1\\0\\0\end{bmatrix}$ | $\dfrac{1}{2}\begin{bmatrix}1\\-j\\0\\0\\-1\\j\\0\\0\end{bmatrix}$ | $\dfrac{1}{2}\begin{bmatrix}1\\-j\\0\\0\\-j\\-1\\0\\0\end{bmatrix}$ |
| 16 to 19 | $\dfrac{1}{2\sqrt{2}}\begin{bmatrix}1&1\\1&1\\0&0\\0&0\\1&-1\\1&-1\\0&0\\0&0\end{bmatrix}$ | $\dfrac{1}{2\sqrt{2}}\begin{bmatrix}1&1\\1&1\\0&0\\0&0\\j&-j\\j&-j\\0&0\\0&0\end{bmatrix}$ | $\dfrac{1}{2\sqrt{2}}\begin{bmatrix}1&1\\j&j\\0&0\\0&0\\1&-1\\j&-j\\0&0\\0&0\end{bmatrix}$ | $\dfrac{1}{2\sqrt{2}}\begin{bmatrix}1&1\\j&j\\0&0\\0&0\\j&-j\\-1&1\\0&0\\0&0\end{bmatrix}$ |
| 20 to 23 | $\dfrac{1}{2\sqrt{2}}\begin{bmatrix}1&1\\-1&-1\\0&0\\0&0\\1&-1\\-1&1\\0&0\\0&0\end{bmatrix}$ | $\dfrac{1}{2\sqrt{2}}\begin{bmatrix}1&1\\-1&-1\\0&0\\0&0\\j&-j\\-j&j\\0&0\\0&0\end{bmatrix}$ | $\dfrac{1}{2\sqrt{2}}\begin{bmatrix}1&1\\-j&-j\\0&0\\0&0\\1&-1\\-j&j\\0&0\\0&0\end{bmatrix}$ | $\dfrac{1}{2\sqrt{2}}\begin{bmatrix}1&1\\-j&-j\\0&0\\0&0\\j&-j\\1&-1\\0&0\\0&0\end{bmatrix}$ |

(continued)

| Number | G7 (PAs corresponding to four antenna ports) | | | |
|---|---|---|---|---|
| 24 to 27 | $\dfrac{1}{2\sqrt{3}}\begin{bmatrix}1&1&1\\1&-1&1\\0&0&0\\0&0&0\\1&1&-1\\1&-1&-1\\0&0&0\\0&0&0\end{bmatrix}$ | $\dfrac{1}{2\sqrt{3}}\begin{bmatrix}1&1&1\\1&-1&1\\0&0&0\\0&0&0\\j&j&-j\\j&-j&-j\\0&0&0\\0&0&0\end{bmatrix}$ | $\dfrac{1}{2\sqrt{3}}\begin{bmatrix}1&1&1\\-1&1&-1\\0&0&0\\0&0&0\\1&1&-1\\-1&1&1\\0&0&0\\0&0&0\end{bmatrix}$ | $\dfrac{1}{2\sqrt{3}}\begin{bmatrix}1&1&1\\-1&1&-1\\0&0&0\\0&0&0\\j&j&-j\\-j&j&j\\0&0&0\\0&0&0\end{bmatrix}$ |
| 28 and 29 | $\dfrac{1}{4}\begin{bmatrix}1&1&1&1\\1&-1&1&-1\\0&0&0&0\\0&0&0&0\\1&1&-1&-1\\1&-1&-1&1\\0&0&0&0\\0&0&0&0\end{bmatrix}$ | $\dfrac{1}{4}\begin{bmatrix}1&1&1&1\\1&-1&1&-1\\0&0&0&0\\0&0&0&0\\j&j&-j&-j\\j&-j&-j&j\\0&0&0&0\\0&0&0&0\end{bmatrix}$ | | |

It may be understood that any precoding matrix in Table 19 may be generated based on one 4Tx fully coherent codeword, and a quantity of uplink transmission layers corresponding to the precoding matrix is the same as a quantity of columns of the 4Tx codeword for generating the precoding matrix. For example, eight antenna ports are grouped into two antenna port groups, a first antenna port group in the two antenna port groups includes antenna ports numbered {0, 4} and {1, 5}, and a second antenna port group includes antenna ports numbered {2, 6} and {3, 7}. One "one-layer 4Tx fully coherent codeword" may be used to determine a "one-layer 8Tx codeword" that supports full power transmission in the manner 63. Specifically, the "one-layer 4Tx fully coherent codeword" is used to determine precoding information of a first antenna port group in a precoding matrix, and precoding information of a second antenna port group is 0.

Based on the foregoing solution, in a possible design, the terminal reports, based on the coherence capability of the terminal and a PA capability of each port, a precoding matrix set that can support full power transmission. For example, when the coherence capability of the terminal device is non-coherent, the terminal reports one number in G0 to G3 based on the PA capability of each port or does not perform reporting. When the coherence capability of the terminal device is partially coherent 2, the terminal reports one number in G4 to G6 based on the PA capability of each port or does not perform reporting. When the coherence capability of the terminal device is partially coherent 1, the terminal reports G7 based on the PA capability of each port or does not perform reporting.

S602: The network device sends third information to the terminal device, where the third information indicates L predefined codewords, any one of the L predefined codewords is a codeword supporting full power transmission, and the L predefined codewords are used to determine precoding information of K antenna ports in a second uplink precoding matrix.

In a first optional implementation, L is 1, the predefined codeword indicated by the third information is the second precoding matrix used by the terminal device to send uplink data, and a quantity of transmit antenna ports corresponding to the predefined codeword is the same as a quantity of transmit antenna ports of the second precoding matrix. An 8Tx terminal is used as an example. The network device determines one identifier in G0 to G7 based on the second information, and then selects one precoding matrix from precoding matrices (or a precoding matrix set) indicated by the identifier. One predefined codeword indicated by the network device in the third information may be the selected precoding matrix.

For example, for the non-coherent 8Tx terminal, the network device determines, based on the second information, that one identifier in G0 to G3 is G2, and then may include G2 in the third information. One predefined codeword indicated by the third information is a precoding matrix indicated by G2. In this case, L is 1, and the quantity of transmit antenna ports corresponding to the L predefined codewords indicated by the third information is the same as the quantity of transmit antenna ports of the second precoding matrix. For another example, for the partially-coherent-2 8Tx terminal, the network device determines, based on the second information, that one identifier in G4 to G6 is G5, and then may include one number (for example, 2) in G5 in the third information, to indicate that one predefined codeword indicated by the third information is a precoding matrix numbered 2 in a precoding matrix set indicated by G5. For another example, for the partially-coherent-1 8Tx terminal, the network device determines G7 based on the second information, and then may include one number (for example, 2) in G7 in the third information, to indicate that one predefined codeword indicated by the third information is a precoding matrix numbered 2 in a precoding matrix set indicated by G7.

S603: The terminal device determines, based on the second information and the third information, the second uplink precoding matrix used by the terminal device to send the uplink data.

Specifically, the terminal device may determine one identifier in G0 to G7 based on the second information. If the identifier is one identifier in G0 to G3, the terminal device may determine the predefined codeword indicated by the third information as the second uplink precoding matrix. If the identifier is one identifier in G4 to G7, the terminal device may determine, based on the third information from a precoding matrix set indicated by the identifier, a precoding matrix as the second uplink precoding matrix.

S604: The terminal device may precode the uplink data based on the second uplink precoding matrix, and then send precoded uplink data to the access network device.

In the foregoing method provided in this embodiment of this application, based on a fully coherent 2Tx or 4Tx codeword, an uplink precoding matrix that is adapted to a larger quantity (for example, 8) of uplink transmit antenna ports is flexibly generated, and meets a requirement of full power transmission of fullpowerMode2. This helps improve uplink transmission efficiency and performance.

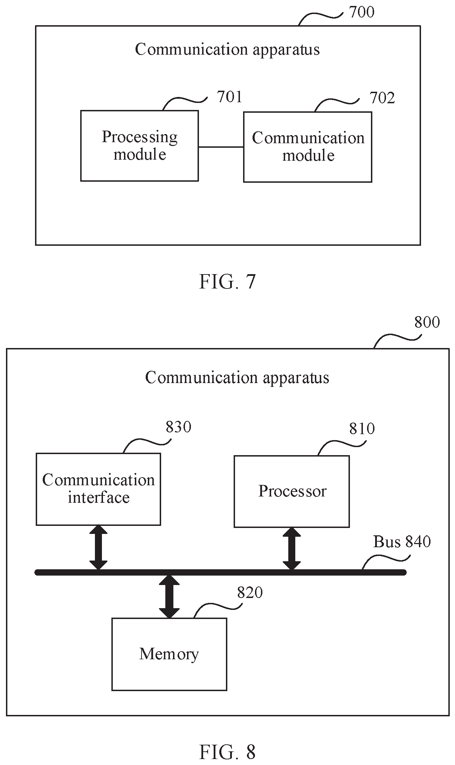

Based on a same concept, refer to FIG. 7. An embodiment of this application provides a communication apparatus 700. The communication apparatus 700 includes a processing module 701 and a communication module 702. The communication apparatus 700 may be a terminal device, or may be a communication apparatus that is used in the terminal device or used in matching with the terminal device and that can implement a communication method performed on a terminal device side. Alternatively, the communication apparatus 700 may be an access network device, or may be a communication apparatus that is used in the access network device or used in matching with the access network device and that can implement a communication method performed on an access network device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the terminal device side or the access network device side in the foregoing method. A device configured to implement a receiving function in the communication module may be considered as a receiving unit, and a device configured to implement a sending function in the communication module may be considered as a sending unit. In other words, the communication module includes the receiving unit and the sending unit.

When the communication apparatus 700 is used in the terminal device, the processing module 701 may be configured to implement processing functions of the terminal device in the embodiments shown in FIG. 3, FIG. 5, and FIG. 6, and the communication module 702 may be configured to implement receiving and sending functions of the terminal device in the embodiments shown in FIG. 3, FIG. 5, and FIG. 6. Alternatively, the communication apparatus may be understood with reference to the fifth aspect and the possible designs in the fifth aspect in the summary.

When the communication apparatus 700 is used in the access network device, the processing module 701 may be configured to implement processing functions of the access network device in the embodiments shown in FIG. 3, FIG. 5, and FIG. 6, and the communication module 702 may be configured to implement receiving and sending functions of the access network device in the embodiments shown in FIG. 3, FIG. 5, and FIG. 6. Alternatively, the communication apparatus may be understood with reference to the sixth aspect and the possible designs in the sixth aspect in the summary.

In addition, it should be noted that the communication module and/or the processing module may be implemented by a virtual module. For example, the processing module may be implemented by a software functional unit or a virtual apparatus, and the communication module may be implemented by a software function or a virtual apparatus. Alternatively, the processing module or the communication module may be implemented by a physical apparatus. For example, if the communication apparatus is implemented by a chip/chip circuit, the communication module may be an input/output circuit and/or a communication interface, and performs an input operation (corresponding to the foregoing receiving operation) and an output operation (corresponding to the foregoing sending operation); and the processing module is an integrated processor, a microprocessor, or an integrated circuit.

Division into the modules in embodiments of this application is an example, is merely logical function division, and may be other division during actual implementation. In addition, functional modules in each of embodiments of this application may be integrated into one processor, each of the modules may exist alone physically, or two or more modules may be integrated into one module. The integrated module may be implemented in a form of hardware, or may be implemented in a form of a software functional module.

Based on a same technical concept, an embodiment of this application further provides a communication apparatus 800. For example, the communication apparatus 800 may be a chip or a chip system. Optionally, in this embodiment of this application, the chip system may include a chip, or may include a chip and another discrete device.

The communication apparatus 800 may be configured to implement a function of any network element in the communication system described in the foregoing embodiments. The communication apparatus 800 may include at least one processor 810. The processor 810 is coupled to a memory. Optionally, the memory may be located inside the communication apparatus, the memory may be integrated with the processor, or the memory may be located outside the communication apparatus. For example, the communication apparatus 800 may further include at least one memory 820. The memory 820 stores a necessary computer program, a computer program, or instructions and/or data for implementing any one of the foregoing embodiments. The processor 810 may execute the computer program stored in the memory 820, to complete the method in any one of the foregoing embodiments.

The communication apparatus 800 may further include a communication interface 830. The communication apparatus 800 may exchange information with another device through the communication interface 830. For example, the communication interface 830 may be a transceiver, a circuit, a bus, a module, a pin, or another type of communication interface. When the communication apparatus 800 is a chip-type apparatus or circuit, the communication interface 830 in the communication apparatus 800 may alternatively be an input/output circuit, and may input information (or referred to as receiving the information) and output information (or referred to as sending the information). The processor is an integrated processor, a microprocessor, an integrated circuit, or a logic circuit, and the processor may determine output information based on input information.

The coupling in embodiments of this application is indirect coupling or a communication connection between apparatuses, units, or modules in an electrical form, a mechanical form, or another form, and is for information exchange between the apparatuses, the units, or the modules. The processor 810 may operate cooperatively with the memory 820 and the communication interface 830. A specific connection medium between the processor 810, the memory 820, and the communication interface 830 is not limited in embodiments of this application.

Optionally, refer to FIG. 8. The processor 810, the memory 820, and the communication interface 830 are connected to each other through a bus 840. The bus 840 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

In a possible implementation, the communication apparatus 800 may be used in an access network device. Specifically, the communication apparatus 800 may be the access network device, or may be an apparatus that can support the access network device to implement a function of the access network device in any one of the foregoing embodiments. The memory 820 stores a computer program (or instructions) and/or data for implementing the function of the access network device in any one of the foregoing embodiments. The processor 810 may execute the computer program stored in the memory 820, to complete the method performed by the access network device in any one of the foregoing embodiments. When the communication apparatus 800 is used in the access network device, the communication interface in the communication apparatus 800 may be configured to interact with a terminal device, and send information to the terminal device or receive information from the terminal device.

In another possible implementation, the communication apparatus 800 may be used in a terminal device. Specifically, the communication apparatus 800 may be the terminal device, or may be an apparatus that can support the terminal device to implement a function of the terminal device in any one of the foregoing embodiments. The memory 820 stores a computer program (or instructions) and/or data for implementing the function of the terminal device in any one of the foregoing embodiments. The processor 810 may execute the computer program stored in the memory 820, to complete the method performed by the terminal device in any one of the foregoing embodiments. When the communication apparatus 800 is used in the terminal device, the communication interface in the communication apparatus 800 may be configured to interact with an access network device, and send information to the access network device or receive information from the access network device.

The communication apparatus 800 provided in this embodiment may be used in the access network device to complete the method performed by the access network device, or may be used in the terminal device to complete the method performed by the terminal device. Therefore, for technical effects that can be achieved by the communication apparatus, refer to the foregoing method examples. Details are not described herein again.

According to the foregoing embodiments, an embodiment of this application provides a communication system, including an access network device and a terminal device. The access network device and the terminal device may implement the method provided in the embodiment shown in FIG. 3, FIG. 5, or FIG. 6.

All or some of the technical solutions provided in embodiments of this application may be implemented by using software, hardware, firmware, or any combination thereof. When the software is for implementation, all or some of the technical solutions may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In embodiments of this application, without logical contradiction, embodiments may be mutually referenced. For example, the methods and/or terms between the method embodiments may be mutually referenced. For example, the functions and/or terms between the apparatus embodiments may be mutually referenced. For example, the functions and/or terms between the apparatus embodiments and the method embodiments may be mutually referenced.

It is clear that a person skilled in the art can make various modifications and variations to embodiments of this application without departing from the scope of embodiments of this application. Therefore, embodiments of this application are intended to cover these modifications and variations of embodiments this application if they fall within the scope of the claims of embodiments of this application and equivalent technologies thereof.

**Claims**

1. An uplink precoding indication method, comprising:

   receiving, by a terminal device, first information from a network device, wherein the first information indicates M predefined codewords, transmit antenna ports corresponding to any one of the M predefined codewords are fully coherent, and M is a positive integer; and
   determining, by the terminal device based on the first information, a first uplink precoding matrix used by the terminal device to send uplink data, wherein a quantity of transmit antenna ports corresponding to the first uplink precoding matrix is greater than a quantity of transmit antenna ports corresponding to any one of the M predefined codewords.

2. An uplink precoding indication method, comprising:

   determining, by a network device, first information, wherein the first information indicates M predefined codewords, transmit antenna ports corresponding to any one of the M predefined codewords are fully coherent, M is a positive integer, the first information is used to determine a first uplink precoding matrix used by a terminal device to send uplink data, and a quantity of transmit antenna ports corresponding to the first uplink precoding matrix is greater than a quantity of transmit antenna ports corresponding to any one of the M predefined codewords; and
   sending, by the network device, the first information to the terminal device.

3. The method according to claim 1 or 2, wherein the first information comprises a first index and a second index, the first index and/or the second index indicate/indicates the M predefined codewords, and the M predefined codewords are used to determine precoding information of two antenna port groups corresponding to the first uplink precoding matrix.

4. The method according to claim 3, wherein a value of M is 1, a value of the first index belongs to a first index interval, a value of the second index belongs to a second index interval, the first index indicates a first predefined codeword, the first predefined codeword is used to determine precoding information of a first antenna port group in the two antenna port groups, and precoding information of a second antenna port group in the two antenna port groups is 0; or the value of the first index belongs to the second index interval, the value of the second index belongs to the first index interval, the second index indicates a second predefined codeword, the second predefined codeword is used to determine the precoding information of the second antenna port group in the two antenna port groups, and the precoding information of the first antenna port group in the two antenna port groups is 0.

5. The method according to claim 3, wherein a value of M is 2, both a value of the first index and a value of the second index belong to a first index interval, the first index indicates a third predefined codeword, the third predefined codeword is used to determine precoding information of a first antenna port group in the two antenna port groups, the second index indicates a fourth predefined codeword, and the fourth predefined codeword is used to determine precoding information of a second antenna port group in the two antenna port groups.

6. The method according to claim 3, wherein a value of M is 1, both a value of the first index and a value of the second index belong to a second index interval, the first index and the second index indicate a fifth predefined codeword, the fifth predefined codeword is used to determine precoding information of the first antenna port group or precoding information of the second antenna port group, and the precoding information of the first antenna port group is the same as the precoding information of the second antenna port group.

7. The method according to claim 1 or 2, wherein the first uplink precoding matrix corresponds to precoding information of four antenna port groups, and the first information comprises one or more of the following: first indication information, second indication information, and index information of the M predefined codewords;

   the first indication information indicates a quantity of uplink transmission layers corresponding to the first uplink precoding matrix; and
   the second indication information indicates that a quantity of columns corresponding to P antenna port groups in the four antenna port groups in the first uplink precoding matrix is 1, and P is an integer less than or equal to 4.

8. The method according to claim 7, wherein the index information of the M predefined codewords comprises:

   first column quantity allocation information corresponding to the first uplink precoding matrix, wherein the first column quantity allocation information indicates a quantity of columns corresponding to each of the four antenna port groups in the first uplink precoding matrix; and/or
   M third indexes, wherein the M third indexes are in one-to-one correspondence with the M predefined codewords.

9. The method according to claim 7 or 8, wherein the second indication information comprises a value of P, the value of P is determined based on the first column quantity allocation information corresponding to the first uplink precoding matrix, and the first column quantity allocation information indicates the quantity of columns corresponding to each of the four antenna port groups in the first uplink precoding matrix.

10. The method according to any one of claims 7 to 9, wherein M is a positive integer less than or equal to 4, the M predefined codewords are used to determine precoding information of at least M antenna port groups in the four antenna port groups, and a quantity of columns corresponding to the at least M antenna port groups in the four antenna port groups in the first uplink precoding matrix is greater than 0.

11. A communication method, comprising:

   receiving, by a terminal device, first information from a network device, wherein the first information indicates an uplink precoding matrix, a quantity of rows of the uplink precoding matrix is a quantity of transmit antenna ports of the terminal device, the quantity of transmit antenna ports is 8, a quantity of columns of the uplink precoding matrix is a quantity of uplink transmission layers of the terminal device, and the uplink precoding matrix supports a full power transmission mode 1; and
   performing, by the terminal device, uplink transmission based on the uplink precoding matrix.

12. A communication method, comprising:

   determining, by a network device, first information, wherein the first information indicates an uplink precoding matrix, a quantity of transmit antenna ports corresponding to the uplink precoding matrix is 8, a quantity of columns of the uplink precoding matrix is a quantity of uplink transmission layers of the terminal device, and the uplink precoding matrix supports an uplink full power transmission mode 1; and

sending, by the network device, the first information to the terminal device.

13. The method according to claim 11 or 12, wherein a coherence capability of the terminal device is partially coherent 1, the eight transmit antenna ports of the terminal device are grouped into a first antenna port group and a second antenna port group, the first antenna port group comprises transmit antenna ports numbered 0, 1, 4, and 5 in the eight transmit antenna ports, and the second antenna port group comprises transmit antenna ports numbered 2, 3, 6, and 7 in the eight transmit antenna ports.

14. The method according to claim 13, wherein when the quantity of uplink transmission layers is 1, the uplink precoding matrix is:

$$\frac{1}{2\sqrt{2}}\begin{bmatrix}1\\1\\1\\1\\1\\1\\1\\1\end{bmatrix}.$$

15. The method according to claim 11 or 12, wherein a coherence capability of the terminal device is partially coherent 2, the eight transmit antenna ports of the terminal device are grouped into four antenna port groups, a $1^{st}$ antenna port group in the four antenna port groups comprises transmit antenna ports numbered 0 and 4 in the eight transmit antenna ports, a $2^{nd}$ antenna port group in the four antenna port groups comprises transmit antenna ports numbered 1 and 5 in the eight transmit antenna ports, a $3^{rd}$ antenna port group in the four antenna port groups comprises transmit antenna ports numbered 2 and 6 in the eight transmit antenna ports, and a $4^{th}$ antenna port group in the four antenna port groups comprises transmit antenna ports numbered 3 and 7 in the eight transmit antenna ports.

16. The method according to claim 15, wherein

when the quantity of uplink transmission layers is 1, the uplink precoding matrix is: $\frac{1}{2\sqrt{2}}\begin{bmatrix}1\\1\\1\\1\\1\\1\\1\\1\end{bmatrix}$ ; or

when the quantity of uplink transmission layers is 2, the uplink precoding matrix is: $\frac{1}{2\sqrt{2}}\begin{bmatrix}1&0\\1&0\\0&1\\0&1\\1&0\\1&0\\0&1\\0&1\end{bmatrix}.$

17. The method according to claim 11 or 12, wherein a coherence capability of the terminal device is non-coherent; and

when the quantity of uplink transmission layers is 1, the uplink precoding matrix is: $\frac{1}{2\sqrt{2}}\begin{bmatrix}1\\1\\1\\1\\1\\1\\1\\1\end{bmatrix}$ ;

when the quantity of uplink transmission layers is 2, the uplink precoding matrix is: $\frac{1}{2\sqrt{2}}\begin{bmatrix}10\\10\\01\\01\\10\\10\\01\\01\end{bmatrix}$ ;

when the quantity of uplink transmission layers is 3, the uplink precoding matrix is: $\frac{1}{2\sqrt{2}}\begin{bmatrix}100\\100\\010\\001\\100\\100\\010\\001\end{bmatrix}$ ; or

when the quantity of uplink transmission layers is 4, the uplink precoding matrix is: $\frac{1}{2\sqrt{2}}\begin{bmatrix}1000\\0100\\0010\\0001\\1000\\0100\\0010\\0001\end{bmatrix}$ .

18. A communication apparatus, used in a terminal device and comprising:

a communication module, configured to receive first information from a network device, wherein the first information indicates M predefined codewords, transmit antenna ports corresponding to any one of the M predefined codewords are fully coherent, and M is a positive integer; and
a processing module, configured to determine, based on the first information, a first uplink precoding matrix used by the terminal device to send uplink data, wherein a quantity of transmit antenna ports corresponding to the first uplink precoding matrix is greater than a quantity of transmit antenna ports corresponding to any one of the M predefined codewords.

19. A communication apparatus, used in a network device and comprising:

a processing module, configured to determine first information, wherein the first information indicates M predefined codewords, transmit antenna ports corresponding to any one of the M predefined codewords are fully coherent, M is a positive integer, the first information is used to determine a first uplink precoding matrix used by a terminal device to send uplink data, and a quantity of transmit antenna ports corresponding to the first uplink precoding matrix is greater than a quantity of transmit antenna ports corresponding to any one of the M predefined codewords; and

a communication module, configured to send the first information to the terminal device.

20. The apparatus according to claim 18 or 19, wherein the first information comprises a first index and a second index, the first index and/or the second index indicate/indicates the M predefined codewords, and the M predefined codewords are used to determine precoding information of two antenna port groups corresponding to the first uplink precoding matrix.

21. The apparatus according to claim 20, wherein a value of M is 1, a value of the first index belongs to a first index interval, a value of the second index belongs to a second index interval, the first index indicates a first predefined codeword, the first predefined codeword is used to determine precoding information of a first antenna port group in the two antenna port groups, and precoding information of a second antenna port group in the two antenna port groups is 0; or the value of the first index belongs to the second index interval, the value of the second index belongs to the first index interval, the second index indicates a second predefined codeword, the second predefined codeword is used to determine the precoding information of the second antenna port group in the two antenna port groups, and the precoding information of the first antenna port group in the two antenna port groups is 0.

22. The apparatus according to claim 20, wherein a value of M is 2, both a value of the first index and a value of the second index belong to a first index interval, the first index indicates a third predefined codeword, the third predefined codeword is used to determine precoding information of a first antenna port group in the two antenna port groups, the second index indicates a fourth predefined codeword, and the fourth predefined codeword is used to determine precoding information of a second antenna port group in the two antenna port groups.

23. The apparatus according to claim 20, wherein a value of M is 1, both a value of the first index and a value of the second index belong to a second index interval, the first index and the second index indicate a fifth predefined codeword, the fifth predefined codeword is used to determine precoding information of the first antenna port group or precoding information of the second antenna port group, and the precoding information of the first antenna port group is the same as the precoding information of the second antenna port group.

24. The apparatus according to claim 18 or 19, wherein the first uplink precoding matrix corresponds to precoding information of four antenna port groups, and the first information comprises one or more of the following: first indication information, second indication information, and index information of the M predefined codewords;

the first indication information indicates a quantity of uplink transmission layers corresponding to the first uplink precoding matrix; and
the second indication information indicates that a quantity of columns corresponding to P antenna port groups in the four antenna port groups in the first uplink precoding matrix is 1, and P is an integer less than or equal to 4.

25. The apparatus according to claim 24, wherein the index information of the M predefined codewords comprises:

first column quantity allocation information corresponding to the first uplink precoding matrix, wherein the first column quantity allocation information indicates a quantity of columns corresponding to each of the four antenna port groups in the first uplink precoding matrix; and/or
M third indexes, wherein the M third indexes are in one-to-one correspondence with the M predefined codewords.

26. The apparatus according to claim 24 or 25, wherein the second indication information comprises a value of P, the value of P is determined based on the first column quantity allocation information corresponding to the first uplink precoding matrix, and the first column quantity allocation information indicates the quantity of columns corresponding to each of the four antenna port groups in the first uplink precoding matrix.

27. The apparatus according to any one of claims 24 to 26, wherein M is a positive integer less than or equal to 4, the M predefined codewords are used to determine precoding information of at least M antenna port groups in the four antenna port groups, and a quantity of columns corresponding to the at least M antenna port groups in the four antenna port groups in the first uplink precoding matrix is greater than 0.

28. A communication apparatus, comprising:

a communication module, configured to receive first information from a network device, wherein the first information indicates an uplink precoding matrix, a quantity of rows of the uplink precoding matrix is a quantity of transmit antenna ports of the terminal device, the quantity of transmit antenna ports is 8, a quantity of columns of the uplink precoding matrix is a quantity of uplink transmission layers of the terminal device, and the uplink precoding matrix supports a full power transmission mode 1; and

a processing module, configured to perform uplink transmission based on the uplink precoding matrix.

29. A communication apparatus, comprising:

a processing module, configured to determine first information, wherein the first information indicates an uplink precoding matrix, a quantity of transmit antenna ports corresponding to the uplink precoding matrix is 8, a quantity of columns of the uplink precoding matrix is a quantity of uplink transmission layers of the terminal device, and the uplink precoding matrix supports an uplink full power transmission mode 1; and

a communication module, configured to send the first information to the terminal device.

30. The apparatus according to claim 28 or 29, wherein a coherence capability of the terminal device is partially coherent 1, the eight transmit antenna ports of the terminal device are grouped into a first antenna port group and a second antenna port group, the first antenna port group comprises transmit antenna ports numbered 0, 1, 4, and 5 in the eight transmit antenna ports, and the second antenna port group comprises transmit antenna ports numbered 2, 3, 6, and 7 in the eight transmit antenna ports.

31. The apparatus according to claim 30, wherein when the quantity of uplink transmission layers is 1, the uplink precoding matrix is:

$$\frac{1}{2\sqrt{2}}\begin{bmatrix}1\\1\\1\\1\\1\\1\\1\\1\end{bmatrix}.$$

32. The apparatus according to claim 28 or 29, wherein a coherence capability of the terminal device is partially coherent 2, the eight transmit antenna ports of the terminal device are grouped into four antenna port groups, a $1^{st}$ antenna port group in the four antenna port groups comprises transmit antenna ports numbered 0 and 4 in the eight transmit antenna ports, a $2^{nd}$ antenna port group in the four antenna port groups comprises transmit antenna ports numbered 1 and 5 in the eight transmit antenna ports, a $3^{rd}$ antenna port group in the four antenna port groups comprises transmit antenna ports numbered 2 and 6 in the eight transmit antenna ports, and a $4^{th}$ antenna port group in the four antenna port groups comprises transmit antenna ports numbered 3 and 7 in the eight transmit antenna ports.

33. The apparatus according to claim 32, wherein

when the quantity of uplink transmission layers is 1, the uplink precoding matrix is: $\frac{1}{2\sqrt{2}}\begin{bmatrix}1\\1\\1\\1\\1\\1\\1\\1\end{bmatrix}$ ; or

when the quantity of uplink transmission layers is 2, the uplink precoding matrix is: $\frac{1}{2\sqrt{2}}\begin{bmatrix}1&0\\1&0\\0&1\\0&1\\1&0\\1&0\\0&1\\0&1\end{bmatrix}.$

**34.** The apparatus according to claim 28 or 29, wherein a coherence capability of the terminal device is non-coherent; and

when the quantity of uplink transmission layers is 1, the uplink precoding matrix is: $\frac{1}{2\sqrt{2}}\begin{bmatrix}1\\1\\1\\1\\1\\1\\1\\1\end{bmatrix}$ ;

when the quantity of uplink transmission layers is 2, the uplink precoding matrix is: $\frac{1}{2\sqrt{2}}\begin{bmatrix}10\\10\\01\\01\\10\\10\\01\\01\end{bmatrix}$ ;

when the quantity of uplink transmission layers is 3, the uplink precoding matrix is: $\frac{1}{2\sqrt{2}}\begin{bmatrix}100\\100\\010\\001\\100\\100\\010\\001\end{bmatrix}$ ; or

when the quantity of uplink transmission layers is 4, the uplink precoding matrix is: $\frac{1}{2\sqrt{2}}\begin{bmatrix}1000\\0100\\0010\\0001\\1000\\0100\\0010\\0001\end{bmatrix}$ .

**35.** A communication apparatus, comprising:
a processor, wherein the processor is coupled to a memory, the memory is configured to store a computer program or instructions, and the processor is configured to execute the computer program or the instructions, to implement the method according to any one of claims 1 and 3 to 10, implement the method according to any one of claims 2 to 10, implement the method according to any one of claims 11 and 13 to 17, or implement the method according to any one of claims 12 to 17.

**36.** A communication apparatus, comprising an interface circuit and a logic circuit, wherein

the interface circuit is configured to communicate with a module outside the communication apparatus; and
the logic circuit is configured to execute a computer program, to enable the communication apparatus to perform the method according to any one of claims 1 and 3 to 10, enable the communication apparatus to perform the method according to any one of claims 2 to 10, enable the communication apparatus to perform the method according to any one of claims 11 and 13 to 17, or enable the communication apparatus to perform the method according to any one of claims 12 to 17.

37. A communication system, comprising the communication apparatus according to any one of claims 18 and 20 to 27 and the communication apparatus according to any one of claims 19 to 27, or comprising the communication apparatus according to any one of claims 28 and 30 to 34 and the communication apparatus according to any one of claims 29 to 34.

38. A computer-readable storage medium, wherein the computer-readable storage medium stores a computer program or instructions, and when the instructions are run on a computer, the method according to any one of claims 1 and 3 to 10 is implemented, the method according to any one of claims 2 to 10 is implemented, the method according to any one of claims 11 and 13 to 17 is implemented, or the method according to any one of claims 12 to 17 is implemented.

39. A computer program product, comprising computer-executable instructions, wherein when the computer-executable instructions are run on a computer, the computer is enabled to perform the method according to any one of claims 1 and 3 to 10, perform the method according to any one of claims 2 to 10, perform the method according to any one of claims 11 and 13 to 17, or perform the method according to any one of claims 12 to 17.

FIG. 1

FIG. 2

Terminal device    Network device

S301: First information

(first index and second index)

S302: Determine, based on the first information, a first uplink precoding matrix used by the terminal device to send uplink data

S303: Uplink data (based on the first uplink precoding matrix)

FIG. 3

| | |
|---|---|
| 2  6 | 3  7 |
| 0  4 | 1  5 |

(a)

0  4   1  5   2  6   3  7

(b)

FIG. 4

Terminal device

Network device

S501: First information

(first indication information,
second indication information,
and M third indexes)

S502: Determine, based on the first
information, a first uplink precoding matrix
used by the terminal device to send uplink data

S503: Uplink data
(based on the first uplink
precoding matrix)

FIG. 5

Terminal device

Network device

S601: Second information

S602: Third information

(third indication information,
fourth indication information,
and L third indexes)

S603: Determine, based on the second
information and the third information, a
second uplink precoding matrix used by the
terminal device to send uplink data

S604: Uplink data
(based on the second uplink
precoding matrix)

FIG. 6

700

Communication apparatus

701

Processing module

702

Communication module

FIG. 7

800

Communication apparatus

830

Communication interface

810

Processor

Bus 840

820

Memory

FIG. 8

## INTERNATIONAL SEARCH REPORT

| International application No. |
| --- |
| **PCT/CN2024/112812** |

| A. CLASSIFICATION OF SUBJECT MATTER |
| --- |
| H04B 7/06(2006.01)i; H04W28/086(2023.01)i |
| According to International Patent Classification (IPC) or to both national classification and IPC |

| B. FIELDS SEARCHED |
| --- |
| Minimum documentation searched (classification system followed by classification symbols) |
| IPC:H04W H04B |

| Documentation searched other than minimum documentation to the extent that such documents are included in the fields searched |
| --- |
| |

| Electronic data base consulted during the international search (name of data base and, where practicable, search terms used) |
| --- |
| CNTXT, VEN, WPABS, ENTXT, VCN, 3GPP, CNKI: 上行, 预编码, 码字, 端口, 全相干, 层数, 秩, 满功率传输, 部分相干, precoding, port, 8Tx, antenna, full coherent, TPMI, rank, fullpower, Ng, codebook |

| C. DOCUMENTS CONSIDERED TO BE RELEVANT | | |
| --- | --- | --- |
| Category* | Citation of document, with indication, where appropriate, of the relevant passages | Relevant to claim No. |
| X | MODERATOR (INTERDIGITAL, INC.). "R1-2300165, FL Summary on SRI/TPMI Enhancements; Second Round" *3GPP TSG RAN WG1 #112*, 03 March 2023 (2023-03-03), pages 1-48 | 1-39 |
| X | CN 116349154 A (BEIJING XIAOMI MOBILE SOFTWARE CO., LTD.) 27 June 2023 (2023-06-27) description, paragraphs [0158]-[0340] | 1-39 |
| X | CN 115997350 A (BEIJING XIAOMI MOBILE SOFTWARE CO., LTD.) 21 April 2023 (2023-04-21) description, paragraphs [0054]-[0190] | 1-39 |
| A | CN 115276737 A (GUANGDONG OPPO MOBILE COMMUNICATIONS CO., LTD.) 01 November 2022 (2022-11-01) entire document | 1-39 |
| A | US 2023035992 A1 (APPLE INC.) 02 February 2023 (2023-02-02) entire document | 1-39 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **08 November 2024** | **20 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/112812** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | US 2021314037 A1 (SAMSUNG ELECTRONICS CO., LTD.) 07 October 2021 (2021-10-07) entire document | | 1-39 |

Form PCT/ISA/210 (second sheet) (July 2022)

**INTERNATIONAL SEARCH REPORT**
Information on patent family members

International application No.

**PCT/CN2024/112812**

| Patent document cited in search report | | | Publication date (day/month/year) | Patent family member(s) | | | Publication date (day/month/year) |
|---|---|---|---|---|---|---|---|
| CN | 116349154 | A | 27 June 2023 | WO | 2024168762 | A1 | 22 August 2024 |
| CN | 115997350 | A | 21 April 2023 | WO | 2024113377 | A1 | 06 June 2024 |
| CN | 115276737 | A | 01 November 2022 | WO | 2021142774 | A1 | 22 July 2021 |
| | | | | EP | 4072035 | A1 | 12 October 2022 |
| | | | | EP | 4072035 | A4 | 04 January 2023 |
| | | | | US | 2022352934 | A1 | 03 November 2022 |
| | | | | US | 11990956 | B2 | 21 May 2024 |
| | | | | WO | 2021142955 | A1 | 22 July 2021 |
| | | | | CN | 114731176 | A | 08 July 2022 |
| US | 2023035992 | A1 | 02 February 2023 | WO | 2023004646 | A1 | 02 February 2023 |
| | | | | CN | 116018761 | A | 25 April 2023 |
| US | 2021314037 | A1 | 07 October 2021 | EP | 4111601 | A1 | 04 January 2023 |
| | | | | EP | 4111601 | A4 | 20 March 2024 |
| | | | | KR | 20220162708 | A | 08 December 2022 |
| | | | | WO | 2021201624 | A1 | 07 October 2021 |
| | | | | US | 11716128 | B2 | 01 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311057562